# EUROPEAN PATENT APPLICATION

(11) **EP 2 540 664 A1**
(43) Date of publication of application: **02.01.2013**
(21) Application number: 12174294.4
(22) Date of filing: 29.06.2012
(51) Int. Cl.: C01B 3/22, B01J 19/18, B01J 19/24

(54) **Hydrogen generation system and method for generating hydrogen**

(30) Priority: 30.06.2011 JP 2011145992
(71) Applicant: Formic Acid-Hydrogen Energy Development Corporation, Kyoto-shi, Kyoto 606-8281 (JP)
(72) Inventor: Nakahara, Masaru, Otsu-shi Shiga 520-0023 (JP)
(74) Representative: Majidi, Assieh

(57) **Abstract**

A hydrogen generation system comprising:
a hydrogen generation reaction section (1) for containing a liquid mixture of formic acid and an ionic liquid, and decomposing the formic acid into hydrogen and carbon dioxide by heating; and
a separation section (30) for separating a mixture of hydrogen and carbon dioxide supplied from the hydrogen generation reaction section into hydrogen and carbon dioxide, wherein
after the separation, the hydrogen is sent out of the separation section to an external hydrogen destination, and the carbon dioxide is sent out of the separation section to an external carbon dioxide destination or emitted into the atmosphere.

## Description

### CROSS-REFERENCE TO RELATED APPLICATIONS

This application is related to Japanese Patent application No. 2011-145992, filed on 30 June, 2011 whose priority is claimed under 35 USC §119, the disclosure of which is incorporated by reference in its entirety.

### BACKGROUND OF THE INVENTION

### Field of the Invention

The present invention relates to a hydrogen generation system that generates hydrogen in the presence of an ionic liquid and to a method for generating hydrogen, a mobile (mobile object) and a power generator using or including the system.

### Description of the Related Art

In recent years, there has been a growing problem of global warming, and as causes thereof, ozone layer depletion and increasing carbon dioxide emission due to combustion of fossil fuel have been pointed out.

As alternative energy sources that can reduce carbon dioxide emission, nuclear fuel, solar power, wind power, water power, methanol, methane hydrate, and hydrogen have been attracting attention.

Nuclear power generation using nuclear fuel is advantageous in that it can perform high-efficiency power generation and in that it does not emit carbon dioxide. However, the nuclear power generation holds a risk of radiation leak.

Natural energy resources such as solar power, wind power, and water power are environment-friendly as emitting no carbon dioxide. However, power generation using such natural energy resources is low-efficiency, high-cost, and difficult to produce a stable output.

Methanol and methane hydrate are hopeful, because their carbon dioxide emission due to combustion is reduced in inverse proportion to the number of carbons of conventional fossil fuel, but still stay with a problem of carbon dioxide emission.

On the other hand, hydrogen is more environment-friendly and very promising as a future energy source, because it produces nothing but water in combustion (H₂ + 1/2O₂ → H₂O), emitting no carbon dioxide. However, high-pressure cylinders are mainly used for storage and transport of hydrogen, posing problems in safety and the storage (low capacity). In addition, on an industrial scale, hydrogen is usually produced through electrolysis of water, raising a problem also in production cost.

In view of the abovementioned background, the present inventor has focused on formic acid to solve the hydrogen problems as to the safety, the storage, and the cost that are to be overcome when hydrogen is used on an industrial scale, and proposed a method for generating hydrogen through decarboxylation of formic acid (HCOOH → H₂ + CO₂) by carrying out a hydrothermal reaction (reaction in a closed reactor containing high-temperature and high-pressure water) of formic acid at 250 to 600°C, for example (see Japanese Unexamined

Patent Application Publication No. 2005-289742).

Furthermore, this inventor proposes a method for generating hydrogen from formic acid by the decomposition into hydrogen and carbon dioxide at a lower temperature (see WO 2010/013712). In this hydrogen generation method, formic acid is heated at 100 to 250°C, for example, in the presence of an ionic liquid. Examples of the ionic liquid usable in this method include an imidazolium-based ionic liquid, a phosphonium-based ionic liquid, a pyridinium-based ionic liquid, a pyrrolidinium-based ionic liquid, and a tetraalkylammonium-based ionic liquid.

### Disclosure of the Invention

### Problems to Be Solved by the Invention

While an ionic liquid is used in the hydrogen generation method that was disclosed in WO 2010/013712 proposed by the present inventor, ionic liquids are generally expensive. In order to reduce the cost of hydrogen generation as much as possible by this method, it is necessary to develop a hydrogen generating system by which an ionic liquid is repeatedly usable for the continuous hydrogen generation.

### SUMMARY OF THE INVENTION

### Means for Solving the Problems

In view of the abovementioned circumstances, the present inventor has made intensive studies and, as a result, succeeded in developing a system that can continuously generate hydrogen from formic acid at low cost in the presence of a repeatedly usable ionic liquid to complete the present invention.

According to the present invention, therefore, there is provided a hydrogen generation system comprising:
a hydrogen generation reaction section for containing a liquid mixture of formic acid and an ionic liquid, and decomposing the formic acid into hydrogen and carbon dioxide by heating; and
a separation section for separating a mixture of hydrogen and carbon dioxide supplied from the hydrogen generation reaction section into hydrogen and carbon dioxide, wherein
after the separation, the hydrogen is sent out of the separation section to an external hydrogen destination, and the carbon dioxide is sent out of the separation section to an external carbon dioxide destination or emitted into the atmosphere.
By definition in the present invention, the "liquid mixture of formic acid and an ionic liquid" includes at least one of (A) to (D) below:
   (A) a solution obtained by dissolving formic acid into an ionic liquid (homogeneous solution phase);
   (B) a solution in which an ionic liquid and formic acid coexist (two separate solution phases);
   (C) a solution obtained by dissolving an aqueous solution of formic acid into an ionic liquid (homogeneous solution phase); and
   (D) an aqueous solution of formic acid in coexistence with an ionic liquid (two separate solution phases).

In this invention the "liquid mixture of formic acid and an ionic liquid" means a single- or two-phased liquid solution formed by hydrous or anhydrous formic acid and an ionic liquid.

The "ionic liquid" used in the present invention is a salt composed of the cation and the anion, which is generally a viscous liquid having a viscosity of 20 to 7000 cP at room temperature. The ionic liquid will be described later in detail.

Another point of the present invention is a method for generating hydrogen comprising: heating a liquid mixture of formic acid and an ionic liquid to generate hydrogen using the hydrogen generation system.

Another point of the present invention is a mobile comprising: the hydrogen generation system; and a hydrogen engine for driving the mobile using hydrogen supplied by the hydrogen generation system as a fuel.

Thus, there can be provided a mobile comprising: the hydrogen generation system; and a fuel cell for generating power using hydrogen supplied by the hydrogen generation system as a fuel.

According to this invention, furthermore, there can be provided a power generator comprising: the hydrogen generation system; and a fuel cell or a hydrogen turbine.

### Effects of the Invention

According to the hydrogen generation system due to the present invention, it is possible to safely accommodate formic acid as a storage tank of hydrogen and to extract hydrogen from the formic acid in case of need for its supply to a desired destination. It is also possible to continuously generate hydrogen from formic acid at low cost while supplying formic acid to the hydrogen generation reaction section and while repeatedly using the ionic liquid.

Thus the hydrogen generation system invented here can be loaded onto hydrogen fuel vehicles, such as those equipped with a hydrogen engine and/or a fuel cell that need a hydrogen source.

As described above, in this case formic acid (in the liquid state at normal temperature) serves as a hydrogen storage tank in the hydrogen generation system. Compared with the form of high pressure hydrogen gas stored in a cylinder and the form of hydrogen liquid contained in a very low temperature cylinder, the hydrogen generation system due to this invention is more useful for mobiles and automobiles like hydrogen fuel cars because of the safe, compact, and low-cost hydrogen storage form.

Furthermore, the hydrogen generation system invented here can be connected to commercial or home fuel cells and to a hydrogen turbine (hydrogen combustion turbine) as a hydrogen supply source. In addition, the hydrogen generation system due to the present invention can constitute a cogeneration system that performs hot water supply, heating, power generation, and the like with the heat energy accompanying power generation by a fuel cell or hydrogen turbine.

By the hydrogen generation method invented here it is possible to solve such hydrogen problems as the production cost, safety, cost, and storage efficiency that are met in the industry-scale generation of hydrogen.

### BRIEF DESCRIPTION OF THE DRAWINGS

FIG. 1 is a schematic configuration diagram illustrating Embodiment 1 of a hydrogen generation system due to the present invention;
FIG. 2 is a perspective view illustrating a separation section in Embodiment 1 of the hydrogen generation system;
FIG. 3 is a schematic configuration diagram illustrating a plurality of separation sections in Embodiment 1 of the hydrogen generation system;
FIG. 4 is a schematic configuration diagram illustrating the plurality of separation sections and a water temperature adjustment mechanism in Embodiment 1 of the hydrogen generation system;
FIG. 5 is a block diagram illustrating a control system of Embodiment 1 of the hydrogen generation system;
FIG. 6 is a conception diagram illustrating a hydrogen fuel vehicle including Embodiment 1 of the hydrogen generation system due to the present invention;
FIG. 7 is the first diagram illustrating an example of an operation flow of a hydrogen generation system due to the present invention in the hydrogen fuel vehicle illustrated in FIG. 6;
FIG. 8 is the second diagram illustrating some steps included in the operation flow shown in FIG. 7;
FIG. 9 is the third diagram illustrating some steps included in the operation flow shown in FIG. 7;
FIG. 10 is a schematic configuration diagram illustrating Embodiment 2 of the hydrogen generation system due to the present invention;
FIG. 11A is a side view illustrating a configuration of a spreading section in Embodiment 2 of the hydrogen generation system;
FIG. 11B is a front view illustrating the configuration of the spreading section in Embodiment 2 of the hydrogen generation system;
FIG. 12A is a side view illustrating a configuration of another spreading section in Embodiment 2 of the hydrogen generation system;
FIG. 12B is a front view illustrating the configuration of the spreading section in Embodiment 2 of the hydrogen generation system;
FIG. 13 is a schematic configuration diagram illustrating Embodiment 3 of the hydrogen generation system due to the present invention;
FIG. 14 a schematic perspective view illustrating a hydrogen generation reaction section in Embodiment 3 of the hydrogen generation system (top panel not shown);
FIG. 15 is a schematic configuration diagram illustrating Embodiment 4 of the hydrogen generation system due to the present invention;
FIGs. 16A to 16D are NMR spectra of a sample of Example 1;
FIGs. 17A to 17D are NMR spectra of a sample of Example 2;
FIGs. 18A to 18E are NMR spectra of samples of Examples 4 to 8; and
FIGs. 19A and 19B are spectra for studying deterioration of an ionic liquid (2).

### DESCRIPTION OF THE PREFERRED EMBODIMENTS

### <Hydrogen generation system>

A hydrogen generation system due to the present invention comprises: a hydrogen generation reaction section for containing a liquid mixture of formic acid and an ionic liquid, and decomposing the formic acid into hydrogen and carbon dioxide by heating; and a separation section for separating a mixture of hydrogen and carbon dioxide supplied by the hydrogen generation reaction section into hydrogen and carbon dioxide, wherein after the separation, the hydrogen is sent out of the separation section to an external hydrogen destination, and the carbon dioxide is sent out of the separation section to an external carbon dioxide destination or emitted into the atmosphere.

In the hydrogen generation system due to the present invention, parts that contact with formic acid, and with the liquid mixture of formic acid and an ionic liquid are preferably formed of a material having corrosion resistance. Examples of the material having corrosion resistance against formic acid include ceramics; glass; metals such as Ti-Pd alloys, pure zirconium, Ni-Mo-Cr alloys, and stainless steel; thermoplastic resins such as polypropylene (PP), polytetrafluoroethylene (PTFE), polyethylene (PE), rigid polyvinyl chloride (PVC), polysulfone (PSF), vinylidene chloride (PVDC), polyvinyl alcohol (PVA), fluororesin (PTFE), and methylpentene resin (TPX); thermosetting resins such as phenol resin (PF) and furan resin (FF); and composite materials obtained by coating surfaces of the above-mentioned metals with ceramics, glass or the above-mentioned resins. Since the liquid mixture of formic acid and an ionic liquid is to be heated, it is not preferable to use a thermoplastic resin for parts that contact with the liquid mixture of formic acid and an ionic liquid.

The hydrogen generation system due to the present invention may have the following configuration.

That is, the hydrogen generation system may further comprise a formic acid storage section for storing formic acid supplied externally, so that formic acid is supplied from the formic acid storage section to the hydrogen generation reaction section. According to the configuration, it is possible to develop a control system that controls the amount of formic acid in a reactor in the hydrogen generation reaction section so as to efficiently generate hydrogen from formic acid. It is also possible to steadily supply hydrogen while reducing human work, because the system saves an operator work of measuring and monitoring the amount of formic acid in the reactor, and work of supplying formic acid to the reactor.

Formic acid may be supplied from the formic acid storage section to the hydrogen generation reaction section when the amount of the formic acid in the reactor falls below a specified amount, for example. The amount of the formic acid in the reactor can be measured indirectly by providing a level sensor in the reactor and detecting the liquid level of the liquid mixture of formic acid and an ionic liquid, by providing a flow sensor or a hydrogen concentration sensor in a line along which the mixture of hydrogen and carbon dioxide is sent out from the reactor to the separation section and detecting the flow rate of the mixture or the hydrogen concentration in the mixture or by providing a pressure sensor in the reactor and detecting the pressure of the mixture, for example.

In addition, the hydrogen generation system due to the present invention may further comprise a formic acid synthesis reaction section for containing an ionic liquid and receiving hydrogen and carbon dioxide introduced from an external source to synthesize formic acid from the hydrogen and the carbon dioxide in the presence of the ionic liquid, so that the formic acid synthesized in the formic acid synthesis reaction section can be supplied to the hydrogen generation reaction section. According to the configuration, for example, it is possible to recover hydrogen and/or carbon dioxide generated in an industrial plant and synthesize formic acid using the hydrogen and/or the carbon dioxide recovered to extract hydrogen from the formic acid at the time of need and generate power using the hydrogen. In other words, according to the hydrogen generation system comprising the formic acid synthesis reaction section, it is possible to beneficially utilize hydrogen and/or carbon dioxide, which have hitherto been emitted into the atmosphere, for private power generation at an industrial plant, contributing greatly to energy saving and environmental conservation.

### [Hydrogen generation reaction section]

In the present invention, the hydrogen generation reaction section is not particularly limited, but may have the following configurations (1) to (4) to achieve efficient hydrogen generation. The efficiency can be increased when the configurations (1) to (4) are combined appropriately.
(1) The hydrogen generation reaction section comprises: a closed reactor for containing the liquid mixture of formic acid and an ionic liquid; heating means for heating the liquid mixture of formic acid and an ionic liquid in the reactor; and a spreading section for expanding the surface area of the liquid mixture of formic acid and an ionic liquid in the reactor, and the reactor has a mixture outlet for sending out the mixture of hydrogen and carbon dioxide generated through the reaction in the reactor to the separation section.
   The spreading section is decomposition reaction accelerating means for increasing the efficiency of the decomposition of formic acid into hydrogen and carbon dioxide by expanding the surface area of the liquid mixture of formic acid and an ionic liquid in the reactor and thereby expanding (increasing) areas where the formic acid and/or an aqueous solution of formic acid contacts with the ionic liquid. By expanding the areas where the formic acid and/or aqueous solution of formic acid contacts with the ionic liquid as described above, interfaces for dissolving the formic acid and/or aqueous solution of formic acid into the ionic liquid are increased, and the time to be taken for a step of dissolving the formic acid and/or aqueous solution of formic acid in the ionic liquid having high viscosity is shortened. Further, since a chemical reaction involving electron transfer is accelerated by locally intensified fluctuation of an electric field gradient generated at a nanoscopic interface between the formic acid and/or aqueous solution of formic acid and the ionic liquid, the spreading section is also aimed at creating more interfaces to accelerate the formic acid decomposition reaction even in the absence of a catalyst. According to the configuration, formic acid does not need to be at a high temperature and in a high energy state to be solvated with the ionic liquid, and the formic acid decomposition reaction progresses even at a low temperature due to the local fluctuation of an electric field gradient generated at such nanoscopic interfaces.
(2) The spreading section has a spreading wall movably provided in the reactor so as to contact with the liquid mixture of formic acid and an ionic liquid; and drive means for moving the spreading wall, and the movement of the spreading wall raises the liquid mixture of formic acid and an ionic liquid above the liquid level and causes the liquid mixture to run along a surface of the spreading wall.
   According to the configuration (2), it is possible to easily expand the surface area of the liquid mixture of formic acid and an ionic liquid in a limited space in the reactor. Since ionic liquids are generally viscous, and therefore the area where the formic acid contacts with the ionic liquid is not easily increased even if the liquid mixture of formic acid and an ionic liquid in the reactor is vigorously stirred, it is difficult to generate hydrogen efficiently. Against the problem, the spreading wall is the most appropriate means for expanding the surface area of the viscous ionic liquid and accelerating the formic acid decomposition reaction. In particular, a technique of rotating the spreading wall in the reactor is effective for expanding the surface area of a highly viscous ionic liquid with a simple mechanism and less drive energy.
   Though not particularly limited, the shape and the movement of the movable spreading wall are preferably those that allow significant expansion of the surface area of the ionic liquid in a small space. For example, one or more (preferably a plurality of) discoid spreading walls may be connected in parallel in a skewered state around a rotation axis and disposed so that a lower part of each spreading wall is immersed in the liquid mixture of formic acid and an ionic liquid, and the rotation axis may be rotated by drive means such as a motor. According to the configuration, it is possible to rotate the spreading walls with relatively low resistance against the highly viscous ionic liquid to raise the liquid mixture of formic acid and an ionic liquid adhering to the spreading walls above the liquid level and cause the liquid mixture to run along surfaces of the spreading walls successively.
   Other than rotation, the movement of the movable spreading wall may be pendular-like swing, seesaw-like turn, up-and-down reciprocating motion, and the like, which also can expand the surface area of the ionic liquid.
(3) The spreading section has one or more spreading walls stood in the reactor; and a liquid circulation line for pumping up the liquid mixture of formic acid and an ionic liquid from a bottom of the reactor to an upper part of each spreading wall, and the liquid mixture of formic acid and an ionic liquid runs along surfaces of each spreading wall.
   In this case, the spreading wall is fixed unlike the movable spreading wall. For example, one or more spreading walls are provided in the reactor to divide the internal space of the reactor into a plurality of compartments, so that the liquid mixture of formic acid and an ionic liquid runs downward along both side surfaces of each spreading wall.
   The configuration (3) is advantageous, because the surface area of the liquid mixture of formic acid and an ionic liquid can be easily expanded in a limited space in the reactor, and besides the reactor can be reinforced. In addition, it is preferable to use inner surfaces of enclosing walls defining the outline of the reactor as the side surfaces of the spreading walls, because in this case, the surface area of the liquid mixture of formic acid and an ionic liquid can be further expanded. While being more suitable for the case where an ionic liquid having relatively low viscosity is used, this configuration can also circulate an ionic liquid having high viscosity depending on the kind of a pump (for example, rotary pump) to provide to the liquid circulation line.
(4) The spreading wall has rough surfaces.
   According to the configuration (4), the surface area of the side surfaces of the spreading wall increases to increase the surface area of the liquid mixture of formic acid and an ionic liquid running along the side surfaces (rough surfaces) of the spreading wall. As a result, more interfaces for dissolving the formic acid and/or aqueous solution of formic acid in the ionic liquid are provided to further improve the hydrogen generation efficiency.

In this case, the rough surfaces can be formed by providing projections, recesses or through holes in the surfaces of the spreading wall. A spreading wall made of a ceramic material is advantageous, because it has naturally formed rough surfaces. The shape and the size of the projections, the recesses and the through holes are not particularly limited, and they may be designed so as to achieve the most efficient hydrogen generation according to the viscosity of the ionic liquid, the surface area of the spreading wall and the moving speed of the movable spreading wall, for example.

### [Separation section]

In the present invention, the separation section is not particularly limited, but may have the following configurations (A) to (C) to achieve efficient separation between hydrogen and carbon dioxide. The efficiency can be increased when the configurations (A) to (C) are combined appropriately.
(A) The separation section comprises a water container for containing water through which the mixture of hydrogen and carbon dioxide passes and in which the carbon dioxide is dissolved; and a gas-liquid interface increasing section provided in the water container for increasing contact interfaces between the mixture and the water in the water container, wherein the water container has an outlet for sending out the hydrogen outside the system after separated by dissolving the carbon dioxide into water.
   Since the gas-liquid interface increasing section increases contact interfaces (gas-liquid interfaces) between the mixture and the water in the water container, the carbon dioxide in the mixture can be dissolved into the water efficiently to separate the hydrogen.
(B) The gas-liquid interface increasing section has a filter through which hydrogen and carbon dioxide can pass, the filter provided in the water container to define a plurality of compartments, and the carbon dioxide in the mixture is dissolved into the water to be separated from the hydrogen as the mixture consecutively passes through the water in the plurality of compartments.
   The filter to use in the separation section is preferably made of a material through which carbon dioxide does not easily pass when the carbon dioxide is dissolved into the water, and through which carbon dioxide easily passes when the carbon dioxide dissolved into the water is vaporized to be emitted. Examples of the material include resin woven fabrics, resin nonwoven fabrics, and resin films.
   The larger the number of the compartments, that is, the larger the number of the filters, the higher the purity of the hydrogen separated from the carbon dioxide in the mixture, but too many compartments prolong the hydrogen separation time. The material, thickness, plane area, and the like of the filter also fluctuate the purity of the hydrogen separated and the separation time. Accordingly, the material, thickness, plane area and number of the filter can be determined in this view.
   According to the configuration (B), it is possible to form a simple and effective gas-liquid interface increasing section in a limited space in the water container.
(C) The separation section further comprises a water temperature adjustment mechanism for cooling and heating water in the water container in a switching manner; and a selector valve provided at the outlet for changing the sending out direction, and the carbon dioxide is dissolved into the water to separate the hydrogen as the mixture passes through the water in the water container cooled by the water temperature adjustment mechanism, and the hydrogen separated is sent out to the external hydrogen destination through the outlet, and then ports of the selector valve are changed, the carbon dioxide is generated with the water temperature adjustment mechanism, by heating the water in which carbon dioxide is dissolved, and the carbon dioxide is sent outside the system through the outlet.
   In this case, the water temperature adjustment mechanism is not particularly limited as long as it can cool and heat the water in the water container in a switching manner, and preferably the water temperature adjustment mechanism has high cooling and heating effects. For example, when a heat pump using a heating medium (also referred to as cooling medium) is employed as the water temperature adjustment mechanism, high cooling and heating effects can be obtained. In this case, one heat pump cycle path can be shared to cool and heat the water in the water container in a switching manner, and therefore the water temperature adjustment mechanism can be simplified. When the hydrogen generation system due to the present invention is installed in a hydrogen fuel vehicle, for example, the water temperature adjustment mechanism (heat pump) can be used also as a compressor of an air conditioner of the hydrogen fuel vehicle, which is advantageous.

### [Formic acid synthesis reaction section]

The hydrogen generation system due to the present invention may further comprise a formic acid synthesis reaction section for generating formic acid through the reaction between hydrogen and carbon dioxide in the presence of an ionic liquid based on the new finding by the present inventor.

The formic acid synthesis reaction section is not particularly limited, but may have the following configurations (I) to (V) to achieve efficient formic acid synthesis. The efficiency can be increased when the configurations (I) to (V) are combined appropriately.
(I) The formic acid synthesis reaction section comprises a closed reactor having an outlet for sending out formic acid synthesized to an exterior; heating means for heating an ionic liquid in the reactor; and a spreading section provided in the reactor for expanding the surface area of the ionic liquid in the reactor.
(II) The spreading section has a spreading wall movably provided in the reactor so as to contact with the ionic liquid; and drive means for moving the spreading wall, and the movement of the spreading wall raises the ionic liquid above the liquid level and causes the liquid mixture to run along a surface of the spreading wall.
(III) The spreading section has one or more spreading walls stood in the reactor; and a liquid circulation line for pumping up the ionic liquid from a bottom of the reactor to an upper part of each spreading wall, and the ionic liquid runs along surfaces of each spreading wall.
(IV) The spreading wall has rough surfaces.

That is, the formic acid synthesis reaction section is configured in the same manner as in the hydrogen generation reaction section. (V) A plurality of formic acid synthesis reaction sections are provided.

In the case of the formic acid synthesis reaction section, the spreading section is synthesis reaction accelerating means for increasing efficiency of synthesis of formic acid from hydrogen and carbon dioxide by expanding the surface area of the ionic liquid in the reactor and thereby expanding (increasing) areas where a mixture of hydrogen and carbon dioxide contacts with the ionic liquid. Thus, the area where the mixture of hydrogen and carbon dioxide contacts with the ionic liquid is expanded to provide more interfaces for the mixture to contact with the ionic liquid. Further, since a chemical reaction involving electron transfer is accelerated by locally intensified fluctuation of an electric field gradient generated at a nanoscopic interface between the mixture and the ionic liquid, the spreading section is also aimed at creating more interfaces to accelerate the formic acid synthesis reaction even in the absence of a catalyst. According to the configuration, the mixture does not need to be at a high temperature and in a high energy state, because the formic acid synthesis reaction progresses even at a low temperature and low pressure due to the local fluctuation of an electric field gradient generated at such nanoscopic interfaces.

### < Method for generating hydrogen using hydrogen generation system>

Next, a method for generating hydrogen using the hydrogen generation system having the abovementioned configurations will be described.

The ionic liquid usable in the present invention is a salt composed of the cation and the anion, which is in a liquid state in a temperature range of normal temperature to 200°C, having an extremely low vapor pressure. Formic acid dissolved in the ionic liquid is decomposed at a relatively low temperature of 100 to 250°C to generate hydrogen.

The formic acid decomposition reaction in the ionic liquid progresses at a lower temperature than a formic acid decomposition reaction in hot water. This effect is due to influence of the ionic liquid surrounding formic acid as a solvent and considered a "solvent effect". The "solvent effect" is a characteristic of the present invention as referred to as "formic acid reaction in an ionic liquid in the absence of a catalyst" without the use of a noble metal such as rare earth.

The "ionic liquid" usable in the present invention means, but is not limited to, an ionic liquid of a salt composed of a combination of: a cation such as ammonium ions including imidazolium salts and pyridinium salts, and phosphonium ions, which are phosphorus compounds; and an anion such as halogen ions including bromide ion, halogenated alkyloxy ions such as triflate and trifluoroacetoxy ions, boron ions such tetraphenyl borate, phosphate ions such as hexafluorophosphate.

However, in terms of repeated use, the ionic liquid is suitably the one as represented by the following general formula (1) composed of a phosphonium ion as a cation and a hydrophilic anion such as formate ion, chloride ion or nitrate ion as an anion, because such a liquid allows efficient decomposition of formic acid into hydrogen and carbon dioxide. Such a liquid is preferable also in terms of availability and ease of molecular design. In this case, the ionic liquid usable in the present invention can be obtained by using, as a raw material, an ionic liquid having an anion that can be replaced with a formate ion, a chloride ion or a nitrate ion as the anion in the ionic liquid, and replacing the anion in the ionic liquid as a raw material with a formate ion, a chloride ion or a nitrate ion according to the method described in Biomacromolecules, Vol. 7, 3295-3297. Alternatively, the ionic liquid composed of a phosphonium ion and a formate ion, a chloride ion or a nitrate ion may contain the anion in the raw material. 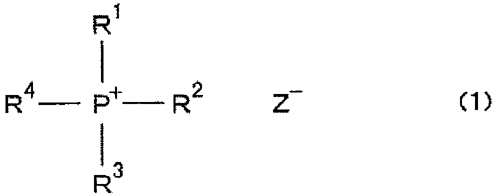 wherein
R¹, R², R³, and R⁴, the same or different, each represent an alkyl group that may be substituted with a halogen atom, or an aryl group or a heteroaryl group that may be substituted at the o-position or the p-position with 1 to 3 halogen atoms or a lower alkyl or alkoxy group, and
Z⁻ represents a counter anion for a phosphonium cation.

In the phosphonium-based ionic liquid represented by the general formula (1), the alkyl group represented by R¹, R², R³, and R⁴ that may be substituted with a halogen atom may be, for example, a linear or branched alkyl group or perfluoroalkyl group having 1 to 18 carbon atoms. Specific examples thereof include methyl, ethyl, n-propyl, iso-propyl, n-butyl, iso-butyl, sec-butyl, tert-butyl, n-pentyl, iso-pentyl, n-hexyl, n-octyl, n-decyl, n-dodecyl, n-tetradecyl, n-octadecyl, trifluoromethyl, pentafluoroethyl, heptafluoro-n-propyl, heptafluoro-iso-propyl, and nonafluoro-n-butyl groups.

Examples of the aryl group that may be substituted at the o-position or the p-position with 1 to 3 halogen atoms or a lower alkyl or alkoxy group include phenyl and benzyl groups.

Examples of the heteroaryl group that may be substituted at the o-position or the p-position with 1 to 3 halogen atoms or a lower alkyl or alkoxy group include furan and thiophene.

In the phosphonium-based ionic liquid represented by the general formula (1), the phosphonium cation is preferably a phosphonium cation in which R¹, R², and R³ are an alkyl, aryl or hydroxymethyl group having 1 to 18 carbon atoms, and R⁴ is an alkyl, aryl, hydroxymethyl or cyanomethyl group having 1 to 18 carbon atoms. Particularly preferably, the phosphonium cation is a tetraphenylphosphonium salt, a trihexyltetradecylphosphonium salt or a tetrabutylphosphonium salt.

Examples of the counter anion for a phosphonium cation represented by Z⁻ include nitride ion (NO₃⁻), p-toluenesulfonate anion, methanesulfonate anion (CH₃SO₃⁻), trifluoromethanesulfonate anion (CF₃SO₃⁻), bis(trifluoromethanesulfonyl)imide anion ((CF₃SO₂)₂N⁻), and formate anion (HCO₂⁻) as well as halide ions such as chloride ion (Cl⁻), bromide ion (Br⁻), and iodide ion (I⁻).

Preferred examples of the ionic liquid include a chloride ion which generates the strongest electric field and an ionic liquid in which a counter anion is a formate anion (i.e., formic acid salt), which are, as a medium for the generation of hydrogen by using formic acid as a raw material, excellent in reaction selectivity (high-purity hydrogen is generated) and reaction velocity. The ionic liquid in which a counter anion is a formate anion can be synthesized, for example, from an ionic liquid in which a counter anion is different from a formate anion such as bromide ion, by an anion exchange method with the use of a strong-basic ion exchange resin (Biomacromolecules, Vol. 7, Pages 3295-3297, 2006). Various kinds of ionic liquids in which a counter anion is different from a formate anion are commercially available. If not commercially available, such ionic liquids can be synthesized, for example, in accordance with the method described in Ionic Liquids in Synthesis I, Wiley-VCH, 2007.

Formic acid and the ionic liquid are mixed at a ratio (mole ratio) of preferably 1:15 to 20:1, and more preferably 1:15 to 5:1.

When the ratio of formic acid to the ionic liquid is less than the above-specified mixing ratio, the hydrogen yield may be significantly decreased. On the other hand, when the ratio of formic acid to the ionic liquid is more than the above-specified mixing ratio, formic acid may undergo decarboxylation coinciding with decarbonylation (HCOOH → H₂O + CO), and therefore the hydrogen generation efficiency may be significantly reduced. A preferred example of the mixing ratio between formic acid and the ionic liquid for achieving a high hydrogen yield is the case where the mixing ratio by mole of formic acid to the ionic acid is less than 0.8:1, when the ionic liquid is a phosphonium ionic liquid in which the cation is composed of three n-hexyl groups and one n-tetradecyl group, and the anion is a chloride ion.

The hydrogen generation from the liquid mixture of formic acid and an ionic liquid by decarboxylation of formic acid can be performed sufficiently at a significantly low heating temperature compared with the heating temperature needed for the hydrogen generation from formic acid without the use of an ionic liquid. Though not particularly limited, the heating temperature is between a temperature slightly raised from normal temperature (for example, approximately 40°C or approximately 50°C) and approximately 250°C. Preferably, the heating temperature is approximately 100°C to approximately 250°C, depending on the kind and amount of the ionic liquid to use. When the heating temperature is lower than 40°C, the rate of decarboxylation of formic acid may be significantly decreased, and when the heating temperature is higher than 250°C, the ionic liquid may be decomposed. The heating time is, for example, 10 minutes to 100 hours. Hydrogen and carbon dioxide generated in the reaction system are separated by the separation section to be described later.

While being capable of generating hydrogen simply and easily without the use of a metal catalyst, the hydrogen generation method due to the present invention may use a metal catalyst. By using a metal catalyst, hydrogen can be generated at a high rate even when the heating temperature is 50°C or more lower than the heating temperature preferred in the case where no metal catalyst is used (even when the heating temperature is 50°C, for example).

Examples of the metal catalyst include simple salts (chlorides and oxides) and complexes (specific examples of ligands: amines, phosphines, conjugated dienes, and the like) of transition metals (Ru, Rh, Ir, and the like) in groups 8, 9, and 10 of the periodic table. More specifically, dichlorotetrakis(triphenylphosphine)ruthenium can be used as the metal catalyst.

The amount of the metal catalyst to use may be, for example, approximately 0.1 to 3% of the total weight of formic acid and the ionic liquid. Specifically, 0.1 to 3 parts by weight of a metal catalyst with respect to 100 parts by weight of the liquid mixture of formic acid and an ionic liquid to be sent to the reaction chamber is added to the ionic liquid or carried by a carrier such as a porous ceramic and the metal catalyst carrier is fixed in the reactor in the hydrogen generation reaction section.

### < Mobile including hydrogen generation system>

Hydrogen fuel vehicles such as hydrogen engine vehicles and fuel cell vehicles generally include a hydrogen cylinder storing a compressed hydrogen or liquefied hydrogen as a hydrogen fuel source. The hydrogen generation system due to the present invention can be installed in a hydrogen fuel vehicle in place of such a conventional hydrogen cylinder as a hydrogen fuel source.

That is, according to another aspect of the present invention, there is provided a mobile comprising the hydrogen generation system due to the present invention; and a hydrogen engine for driving the mobile using hydrogen supplied by the hydrogen generation system as a fuel, or a mobile comprising the hydrogen generation system due to the present invention; and a fuel cell for generating power using hydrogen supplied by the hydrogen generation system as a fuel.

Here, the mobile encompasses vehicles such as automobiles, buses, trucks, dump trucks, tank lorries, and trains; building and civil engineering machineries such as cranes, bulldozers and power shovels; boats such as sail boats, motorboats, and cruisers; and ships such as passenger ships, cargo ships, and tankers that are equipped with a hydrogen engine or a fuel cell.

In these mobiles, the driving force produced by the hydrogen engine or the power produced by the fuel cell may be used for operating various mechanical equipments, electronic devices, instruments, and the like provided in the mobiles or may be extracted out of the mobiles to be used as powers for household or for external equipments, as well as for propulsion power of the mobiles.

In the present invention, the mobile may further comprise a secondary battery.

Functioning as a spare power supply from the start of the operation of the hydrogen generation system due to the present invention to the extraction of hydrogen, the secondary battery (for example, lithium-ion secondary battery) allows driving of the mobile even immediately after the start of the operation of the hydrogen generation system. In the case of hydrogen engine vehicles, motors are needed for rotating wheels in response to supply of power from the secondary battery.

### < Power generator including hydrogen generation system>

According to another aspect of the present invention, there is provided a power generator comprising: the hydrogen generation system due to the present invention; and a fuel cell or a hydrogen turbine to achieve clean power generation using formic acid as a fuel anywhere including average houses, multiple dwelling houses, commercial buildings, shops, industrial plants, accommodations, schools, hospitals, public offices, water purification plants, campsites, amusement parks, theaters, movie theaters, art museums, museums, sports stadiums, baseball stadiums, stations, airports, ports, and power plants. When including the power generator, the mobile can be a power source car capable of generating power for the time being in a disaster-affected area that lost power, for example.

Hereinafter, embodiments of the hydrogen generation system due to the present invention will be described in detail with reference to the drawings. In the following embodiments, hydrogen and carbon dioxide are in a gaseous state by way of example, but they do not need to be limited to the three states of matter.

### (Embodiment 1)

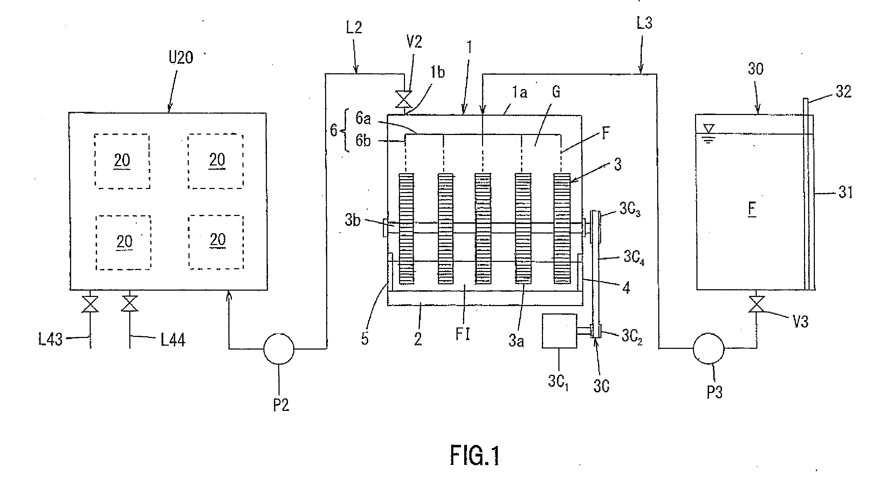

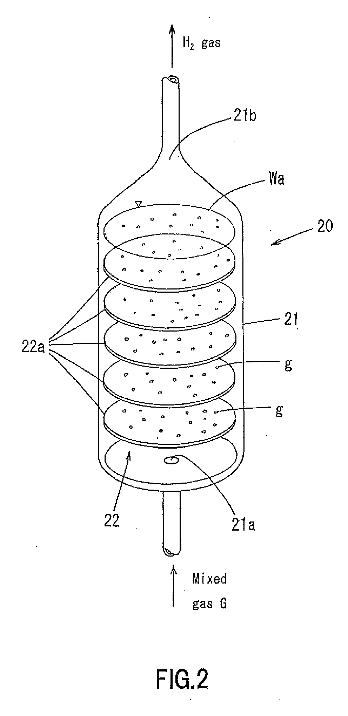

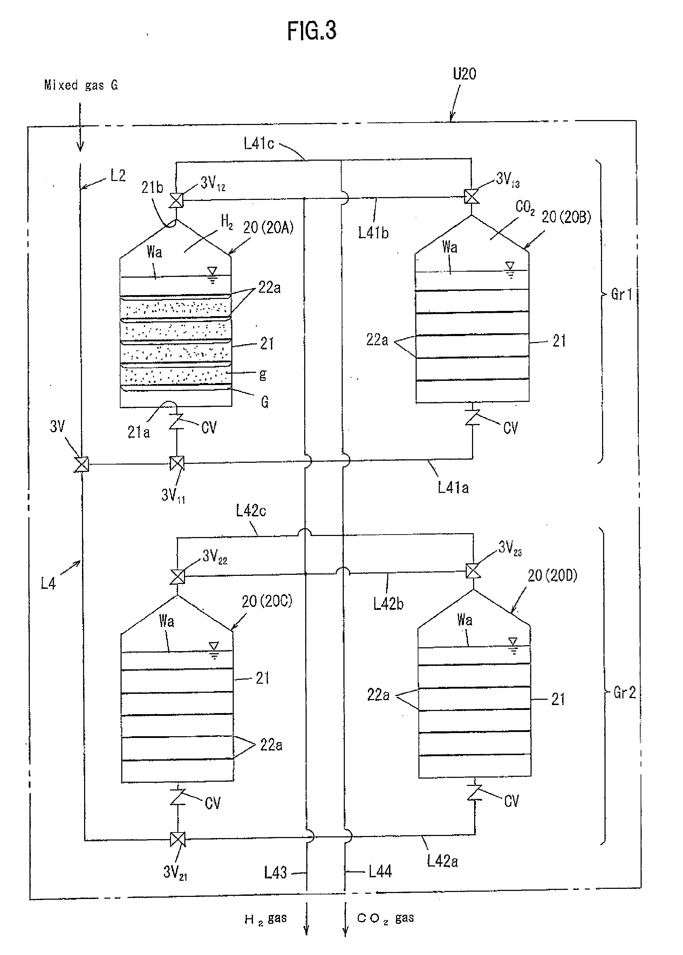

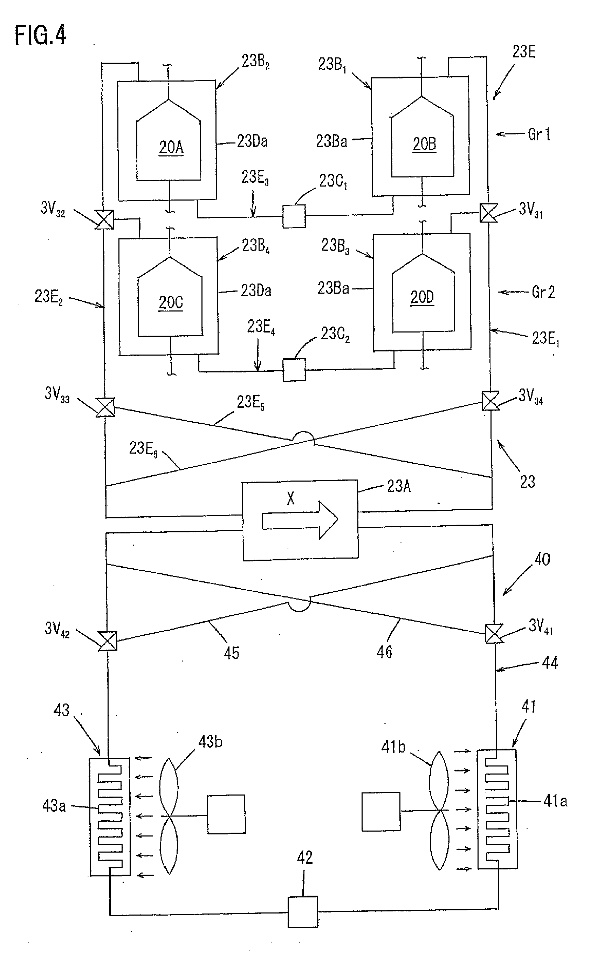

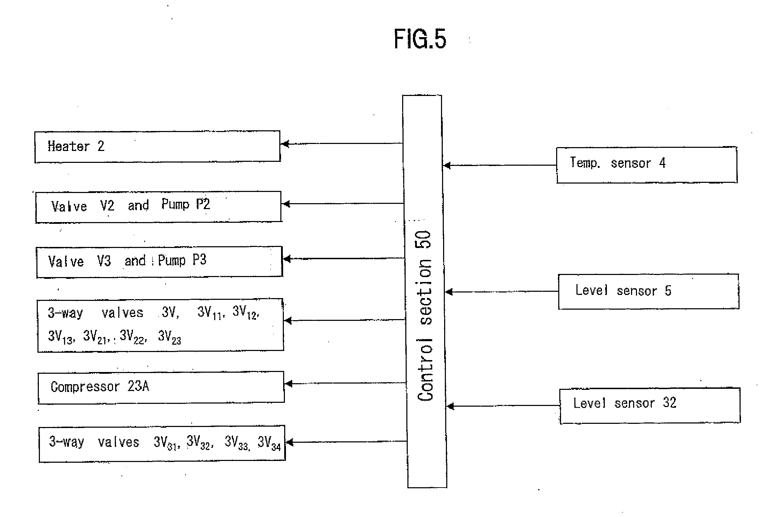

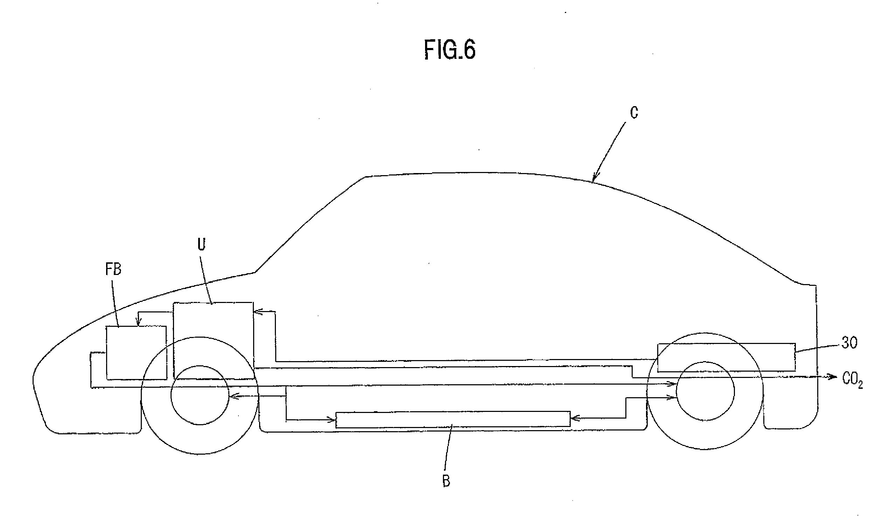

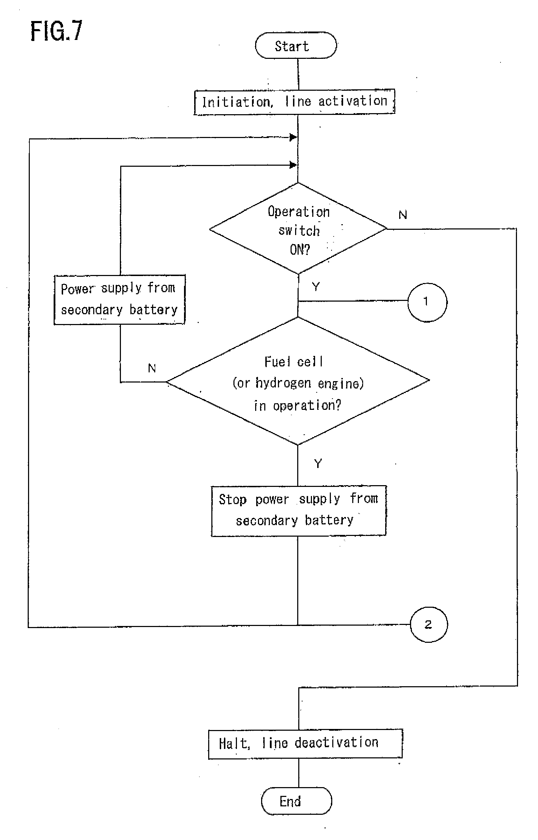

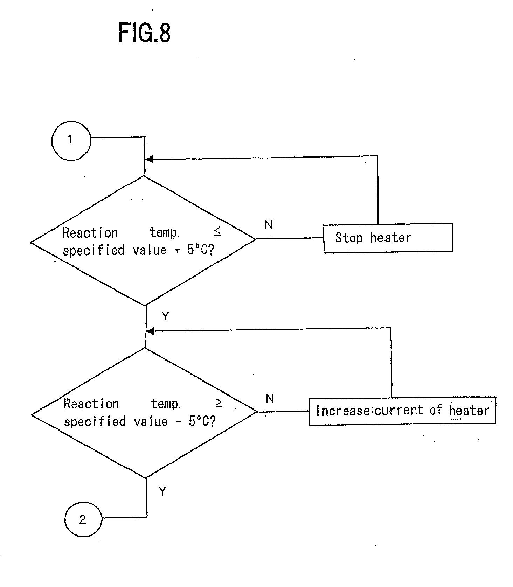

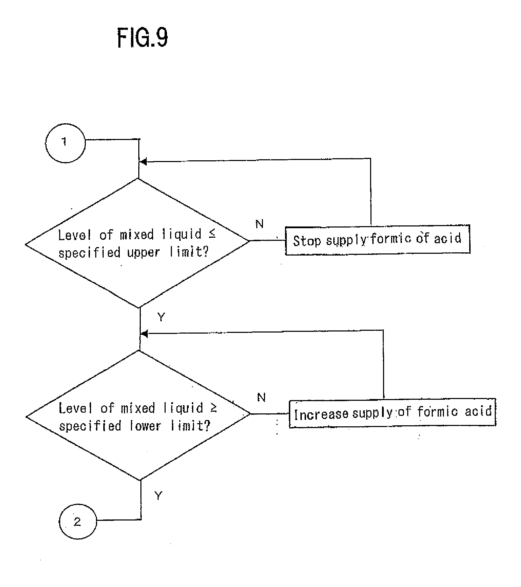

FIG. 1 is a schematic configuration diagram illustrating Embodiment 1 of a hydrogen generation system due to the present invention. FIG. 2 is a perspective view illustrating a separation section in Embodiment 1 of the hydrogen generation system. FIG. 3 is a schematic configuration diagram illustrating a plurality of separation sections in Embodiment 1 of the hydrogen generation system. FIG. 4 is a schematic configuration diagram illustrating a plurality of separation sections and a water temperature adjustment mechanisms in Embodiment 1 of the hydrogen generation system. FIG. 5 is a block diagram illustrating a control system of Embodiment 1 of the hydrogen generation system. FIG. 6 is a conception diagram illustrating a hydrogen fuel vehicle including Embodiment 1 of the hydrogen generation system due to the present invention. FIG. 7 is the first diagram illustrating an example of an operation flow of a hydrogen generation system due to the present invention in the hydrogen fuel vehicle illustrated in FIG. 6. FIG. 8 is the second diagram illustrating some steps included in the operation flow shown in FIG. 7. FIG. 9 is the third diagram illustrating some steps included in the operation flow shown in FIG. 7.

### <Configuration of hydrogen generation system>

First, the configuration of a hydrogen generation system according to Embodiment 1 of the present invention will be described, and then the operation of the hydrogen generation system will be described.

As illustrated in FIG. 1, the hydrogen generation system according to Embodiment 1 of the present invention includes a hydrogen generation reaction section 1, a separation section 20 and a formic acid storage section 30.

### [Hydrogen generation reaction section]

The hydrogen generation reaction section 1 contains a liquid mixture FI of formic acid and an ionic liquid, and decomposes the formic acid in the liquid mixture into hydrogen and carbon dioxide by heating.

The separation section 20 separates a mixed gas G of hydrogen and carbon dioxide supplied from the hydrogen generation reaction section 1 into hydrogen and carbon dioxide. In FIG. 1, illustrated is a separation section unit U20 including four separation sections 20 (see FIG. 3) as a unit.

The formic acid storage section 30 stores formic acid F, and supplies the formic acid F to the hydrogen generation reaction section 1 according to the formic acid concentration in the liquid mixture FI of formic acid and an ionic liquid in the hydrogen generation reaction section 1.

Specifically, the hydrogen generation reaction section 1 includes a hermetically-sealable reactor 1a, a heater 2 as heating means and a spreading section 3.

The reactor 1a is a container formed into a rectangular parallelepiped. The reactor 1a contains the liquid mixture FI of formic acid and an ionic liquid, and has a mixture outlet 1b for sending out the mixed gas G generated therein toward the separation sections 20. The mixture outlet 1b is formed in an upper wall of the reactor 1a, for example, and connected to an upstream end of a pipe line L2 having a valve V2 and a pump P2. The reactor 1a is made of a ceramic material, for example. Alternatively, the reactor 1a may be formed of an inner vessel made of a ceramic material and an outer vessel made of stainless stee1.

The heater 2 is a sheathed heater or a cartridge heater, for example, and heats the liquid mixture FI in the reactor 1a via the reactor 1a. In the case of Embodiment 1, the heater 2 is provided on an outer side of the bottom of the reactor 1a. The reactor 1a may be covered with a heat insulating material to reduce escape of heat in the reactor 1a.

The spreading section 3 is provided in the reactor 1a and expands the surface area of the liquid mixture FI of formic acid and an ionic liquid in the reactor 1a. In the case of Embodiment 1, the spreading section 3 includes a plurality of discoid spreading walls 3a, a rotation axis 3b for connecting the spreading walls in parallel in a skewered state and drive means 3c for rotating the rotation axis 3b. The spreading section 3 is disposed so that a lower part of each spreading wall 3a is immersed in the liquid mixture FI of formic acid and an ionic liquid. The higher the viscosity of the ionic liquid is, the more difficult formic acid is to be dissolved in and/or mixed with the ionic liquid, and the easier formic acid is to stay on the ionic liquid. The spreading walls 3a are therefore disposed so as to be immersed in the ionic liquid forming a lower layer. The spreading walls 3a are each made of a discoid ceramic having a central hole through which the rotation axis 3b is inserted, and each have a peripheral surface having a plurality of grooves, for example. The spreading walls 3a are not limited to the abovementioned shape and may be in the shape of a gear.

The rotation axis 3b is also made of a ceramic material. The spreading walls 3a and the rotation axis 3b are coupled by cutout recesses and engagement projections formed in the central holes of the spreading walls 3a and the peripheral surface of the rotation axis 3b to engage with one another. This configuration allows the spreading walls 3a and the rotation axis 3b to rotate integrally. In order to prevent displacement of the spreading walls 3a, ceramic screws are fixated to the rotation axis 3b at opposite sides of each of the spreading walls 3a.

The both ends of the rotation axis 3b are attached to opposite walls of the reactor 1a in a rotatable and air-tight manner, and one of the ends of the rotation axis 3b is projected from the reactor 1a to be connected to the drive means 3c.

The drive means 3c includes a motor 3c₁, a first pulley 3c₂ fixed to an end of a driving shaft of the motor 3c₁, a second pulley 3c₃ fixed to the end of the rotation axis 3b and a belt 3c₄ laid across the first and second pulleys 3c₂ and 3c₃. Instead of the first and second pulleys 3c₂ and 3c₃, and the belt 3c₄, a sprocket and a chain may be used.

The hydrogen generation reaction section 1 further includes a discharge section 6 provided in the reactor 1a for discharging formic acid from the formic acid storage section 30 to an upper part of each spreading wall 3a, a temperature sensor 4 provided in the reactor 1a for detecting the temperature of the liquid mixture FI of formic acid and an ionic liquid, and a level sensor 5 for detecting the liquid level of the liquid mixture FI.

The discharge section 6 includes a main pipe 6a connected to the formic acid storage section 30 via a pipe line L3 to be described later and a plurality of branch pipes 6b diverging from the main pipe 6a to be disposed above each spreading wall 3a.

When the ionic liquid has high viscosity, formic acid is likely to stay on the ionic liquid, and then the level sensor 5 will detect the liquid level of formic acid.

### [Formic acid storage section]

The formic acid storage section 30 has a hermetically-sealable storage tank 31 for storing the formic acid F supplied from an external source and a level sensor 32 provided in the storage tank 31.

As in the case of the reactor 1a, for example, the storage tank 31 is made of a ceramic material or has a dual structure of a ceramic material and stainless steel. The storage tank 31 has an openable and closable supply port provided at an upper part thereof for receiving formic acid from an external source and a discharge port 31a provided at a bottom thereof, and the discharge port 31a is connected to an upstream end of the pipe line L3 having a valve V3 and a pump P3. The pipe line L3 has a downstream end connected to the main pipe 6a of the discharge section 6 in the hydrogen generation reaction section 1.

In Embodiment 1, the "formic acid F" contained in the storage tank 31 does not necessarily mean formic acid having a concentration of 100%, including an aqueous solution of formic acid having any formic acid concentration.

### [Separation section]

As illustrated in FIGs. 2 to 4, each separation section 20 includes a water container 21 for containing water Wa through which the mixed gas G from the hydrogen generation reaction section 1 passes and in which carbon dioxide is dissolved; and a gas-liquid interface increasing section 22 provided in the water container 21 for increasing contact interfaces between the mixed gas G and the water Wa in the water container 21. The separation section unit U20 includes a water temperature adjustment mechanism 23 for cooling and heating the water in the water container 21 in a switching manner; and a switch line L4.

The water container 21 has an inlet 21a at an lower end for introducing the mixed gas G therein and an outlet 21b at an upper end for sending out to an exterior the hydrogen separated by dissolving into the water Wa the CO₂ in the mixed gas G introduced therein. The water container 21 is further provided with an openable and closable feed-water inlet at an upper part.

The inlet 21a is connected to the pipe line L2 and the switch line L4 to be described later, and the switch line L4 is provided with a check valve CV in the vicinity of the inlet 21a for preventing backflow of the water. The outlet 21b is provided with a selector valve (three-way valves 3V₁₂, 3V₁₃, 3V₂₂ and 3V₂₃ of the switch line L4 to be described later) for changing the sending out direction.

The gas-liquid interface increasing section 22 has a plurality of filters 22a which define a plurality of compartments in the water container 21 and through which the hydrogen and the carbon dioxide can pass. In the case of Embodiment 1, five filters 22a are provided in the water container 21. The gas-liquid interface increasing section 22 allows the mixed gas G to pass through the water in the plurality of compartments sequentially thereby to dissolve into the water carbon dioxide in the mixed gas G to separate hydrogen.

The filters 22a are fitted to the inside of the water container 21 according to the following configuration. First, a cylindrical body, and an introducing section and a sending out section to be connected to opposite ends of the cylindrical body are prepared as components of the water container 21, for example. Then, a filter cartridge holding the plurality of filters 22a therein at predetermined intervals is incorporated in the body via a sealant in an air-tight manner, and then the introducing section and the sending out section are connected to the body via a sealant in a liquid-tight manner.

In Embodiment 1, as illustrated in FIG. 3, four separation sections 20 are provided, and two separation sections 20 form one group. Each group of the separation sections 20 is connected to a downstream end of the pipe line L2 via the switch line L4. That is, a first group Gr1 and a second group Gr2 are connected by the switch line L4 to form the separation section unit U20 (see FIG. 1).

The switch line L4 in Embodiment 1 is not limited to the line route illustrated in FIG. 3 as long as it can supply the mixed gas G to the first group Gr1 and the second group Gr2 of the separation sections 20 at different times, and it can supply the mixed gas G to the two separation sections 20 in the same group at different times.

In the case of Embodiment 1, the switch line L4 includes a three-way valve 3V connected to the downstream end of the pipe line L2, a line L41a for connecting the three-way valve 3V and the inlet 21a of each separation section 20 in the first group Gr1, and a line L42a for connecting the three-way valve 3V and the inlet 21a of each separation section 20 in the second group Gr2. The lines L41a and L42a have three-way valves 3V₁₁ and 3V₂₁, and diverge through the three-way valves 3V₁₁ and 3V₂₁ to be connected to one separation section 20 in the first group Gr1 and one separation section 20 in the second group Gr2, respectively.

The switch line L4 further includes lines L41b and L41c for connecting the outlets 21b of the separation sections 20 in the first group Gr1 via the three-way valves 3V₁₂ and 3V₁₃, lines L42b and L42c for connecting the outlets 21b of the separation sections 20 in the second group Gr2 via the three-way valves 3V₂₂ and 3V₂₃, a line L43 connected to the line L41b of the first group Gr1 and the line L42b of the second group Gr2 for supplying hydrogen to the hydrogen destination, and a line L44 connected to the line L41c of first group Gr1 and the line L42c of the second group Gr2 for emitting carbon dioxide into the atmosphere.

As illustrated in the upper half of FIG. 4, the water temperature adjustment mechanism 23 is a heat pump with the use of a heating medium (for example, ammonia and carbon dioxide). The switch line L4 is not shown in FIG. 4.

The water temperature adjustment mechanism 23 in Embodiment 1 is not limited to the line route illustrated in FIG. 4 as long as it can cool and heat the first and second groups Gr1 and Gr2 of the separation sections 20 at different times, and it can cool and heat the two separation sections 20 in the same group at different times.

The water temperature adjustment mechanism 23 in Embodiment 1 includes a compressor 23A; two heat exchange sections 23B₁ and 23B₂, and one expansion valve 23C₁ for the first group Gr1; two heat exchange sections 23B₃ and 23B₄, and one expansion valve 23C₂ for the second group Gr2; a pipe line 23E for connecting them; and a heating medium flowing through the pipe line 23E.

In the first group Gr1, the heat exchange section 23B₁ includes a case 23Ba for containing one separation section 20. The case 23Ba has, at upper and lower ends, holes through which the switch line L4 connected to the separation section 20 is hermetically inserted and holes connected to the pipe line 23E.

In the first group Gr1, the heat exchange section 23B₂ includes a case 23Da for containing the other separation section 20. The case 23Da also has, at upper and lower ends, holes through which the switch line L4 connected to the separation section 20 is hermetically inserted and holes connected to the pipe line 23E.

The heat exchange sections 23B₃ and 23B₄ in the second group Gr2 have the same configurations as the heat exchange sections 23B₁ and 23B₂ in the first group Gr1.

The pipe line 23E includes a first connection line 23E₃ for connecting the heat exchange section 23B₁, the expansion valve 23C₁ and the heat exchange section 23B₂ in the first group Gr1 in series; a second connection line 23E₄ for connecting the heat exchange section 23B₃, the expansion valve 23C₂ and the heat exchange section 23B₄ in the second group Gr2 in series; and first and second main lines 23E₁ and 23E₂ for connecting the first and second connection lines 23E₃ and 23E₄ in parallel and switching the flow path of the heating medium between the first and second connection lines 23E₃ and 23E₄.

The pipe line 23E further includes a first bypass line 23E₅ and a second bypass line 23E₆ for cross-connecting the first main line 23E₁ and the second main line 23E₂.

Furthermore, three-way valves 3V₃₁, 3V₃₂, 3V₃₃ and 3V₃₄ are provided at a connection point among the first main line 23E₁, the first connection line 23E₃ and the second connection line 23E₄, a connection point among the second main line 23E₂, the first connection line 23E₃ and the second connection line 23E₄, a connection point between the first bypass line 23E₅ and the second main line 23E₂, and a connection point between the second bypass line 23E₆ and the first main line 23E₁.

The compressor 23A may be exclusively used by the water temperature adjustment mechanism 23 or shared by the water temperature adjustment mechanism 23 and another heat pump.

In the case of Embodiment 1, as illustrated in FIG. 6, the hydrogen generation system due to the present invention is installed in a fuel cell vehicle C, and the compressor 23A is shared by an air conditioner of the fuel cell vehicle C and the water temperature adjustment mechanism of the hydrogen generation system, for example. In the case of the fuel cell vehicle C illustrated in FIG. 6, a hydrogen generation unit U obtained by integrating the hydrogen generation reaction section and the separation section of the hydrogen generation system due to the present invention, and a fuel cell FB are placed in a front area of the vehicle body, while the formic acid storage section 30 of the hydrogen generation system is placed in a rear area of the vehicle body. Further, a secondary battery (for example, lithium-ion secondary battery) B is placed under the floor in a central area of the vehicle body. The operation of the fuel cell vehicle C will be described later in detail.

As illustrated in the lower half of FIG. 4, an air conditioner 40 of a fuel cell vehicle includes the compressor 23A; an outdoor heat exchange section 41; an expansion valve 42; an indoor heat exchange section 43; a main line 44 for connecting them in series; a first bypass line 45 for connecting a compressor discharge side and a compressor intake side of the main line 44 through a three-way valve 3V₄₁; a second bypass line 46 for connecting the compressor discharge side and the compressor intake side of the main line 44 through a three-way valve 3V₄₂ across the first bypass line 45; and a heating medium.

The outdoor heat exchange section 41 has a corrugated tube section 41a and a first fan 41b for sending outdoor air to the corrugated tube section 41a to urge heat exchange between the heating medium passing through the corrugated tube section 41a and outdoor air. The indoor heat exchange section 43 has a corrugated tube section 43a and a second fan 43b for sending indoor air to the corrugated tube section 43a to urge heat exchange between the heating medium passing through the corrugated tube section 43a and outdoor air.

### [Control section]

As illustrated in FIG. 5, the hydrogen generation system due to the present invention may include a control section 50 for controlling the operation of the system. In this case, the control section 50 is provided on a control panel together with an operation switch for turning ON/OFF the hydrogen generation system, for example. Alternatively, a control section for controlling the driving of a mobile such as the abovementioned fuel cell vehicle may control the operation of the hydrogen generation system.

In this case, the control section 50 is electrically connected with the heater 2; the temperature sensor 4; the level sensor 5; the pumps P2 and P3, and the valves V2 and V3 in the lines L2 and L3; the level sensor 32 in the formic acid storage section 30; the three-way valves 3V, 3V₁₁, 3V₁₂, 3V₁₃, 3V₂₁, 3V₂₂ and 3V₂₃ in the separation section 20; the three-way valves 3V₃₁, 3V₃₂, 3V₃₃ and 3V₃₄ in the water temperature adjustment mechanism 23; and so on in the hydrogen generation system.

The control section 50 is configured to receive detection signals from the temperature sensor 4 and the level sensors 5 and 32, and control ON/OFF of the heater 2, the pumps P2 and P3, the valves V2 and V3, and the three-way valves 3V, 3V₁₁, 3V₁₂, 3V₁₃, 3V₂₁, 3V₂₂, 3V₂₃, 3V₃₁, 3V₃₂, 3V₃₃, and 3V₃₄, and so on based on the detection signals from the sensors and a predetermined operation program.

### <Operation of hydrogen generation system>

The hydrogen generation system due to the present invention is operated based on an operation program as described below, for example (see FIGs. 1 to 5).

By turning on the operation switch of the hydrogen generation system, the hydrogen generation reaction section 1, the separation section 20, the formic acid storage section 30 and the lines for connecting these sections are put into operation.

In the hydrogen generation reaction section 1, the liquid mixture FI of formic acid and an ionic liquid is heated via the reactor 1a by heat generation of the heater 2. In the meantime, the motor 3c₁ is rotated, and the rotative force of the motor 3c₁ is transmitted to the rotation axis 3b via the first pulley 3c₂, the belt 3c₃ and the second pulley 3c₄ to rotate the rotation axis 3b and the spreading walls 3a.

The rotation of the spreading walls 3a raises the liquid mixture FI heated around the spreading walls 3a above the liquid level. When having high viscosity like starch syrup, in particular, the ionic liquid is highly adhesive to the spreading walls 3a, and therefore raised high above the liquid level as the spreading walls 3a rotate, and the formic acid is also raised high together with the ionic liquid. In addition, the plurality of grooves in the peripheral surfaces of the spreading walls 3a are effective for the raise of the ionic liquid. Having a discoid shape with a small thickness, on the other hand, the spreading walls 3a have less rotational resistance to the ionic liquid and prevents the motor 3c₁ from being overloaded.

The ionic liquid raised by the spreading walls 3a spreads along the surfaces (peripheral surfaces and both side surfaces) of the spreading walls 3a into a film form to be expanded in the surface area. In the meantime, the formic acid spreads into a film form along the surface of the ionic liquid in the film form. Thereby, the area where the formic acid and/or aqueous solution of formic acid contacts with the ionic liquid increases considerably. As a result, in a short time from the start of the operation, the formic acid F in the liquid mixture FI of formic acid and the ionic liquid is decomposed into hydrogen and carbon dioxide to generate the mixed gas G of hydrogen and carbon dioxide in the reactor 1a, and the mixed gas G is sent to the separation section unit U20. When an aqueous solution of formic acid is used, water may remain in the ionic liquid in the reactor 1a, or some of the carbon dioxide generated may be dissolved in the ionic liquid, but the formic acid decomposition reaction will not be affected significantly. Moreover, when water and carbon dioxide in the ionic liquid increase, the water and the carbon dioxide easily vaporize from the heated ionic liquid to be mixed with the mixed gas G and discharged out of the reactor.

While the spreading section 3 is in operation, the temperature of the liquid mixture FI of formic acid and the ionic liquid is detected by the temperature sensor 4, and detection signals thereof are input into the control section 50. For example, when the temperature of the liquid mixture FI of formic acid and the ionic liquid is set to be raised to 150°C, the control section 50 controls the heater 2 so that the heater is turned off when the temperature of the liquid mixture FI of formic acid and the ionic liquid exceeds 155°C and turned on when the temperature falls below 145°C.

With the generation of the mixed gas G in the reactor 1a, the formic acid concentration in the liquid mixture FI of formic acid and the ionic liquid decreases. The level sensor 5 detects the liquid level of the liquid mixture FI of formic acid and the ionic liquid and transmits detection signals to the control section 50 at all times. When the control section 50 decides that the liquid level of the liquid mixture FI of formic acid and the ionic liquid in the hydrogen generation reaction section 1 is lower than a predetermined position, the valve V3 is opened and the pump P3 is driven to supply dropwise the formic acid F in the storage tank 31 in the formic acid storage section 30 onto the spreading walls 3a in the reactor 1a according to the control by the control section 50. Thereby, the mixing ratio (mole ratio) of the formic acid to the ionic liquid is restored to 20:1, for example. The pump P3 is stopped when the control section determines that the liquid level of the liquid mixture FI is restored to the predetermined position, for example. In the formic acid storage section 30, the level sensor 32 detects the liquid level of the formic acid F in the storage tank 31 and transmits detection signals to the control section 50 at all times. When deciding that the liquid level of the formic acid F in the storage tank 31 is lower than the predetermined position, the control section 50 outputs supply signals. The supply signals are input into a display section provided to the control panel or a driver's seat, and thereby the display section displays a message informing an operator of when to supply formic acid.

The mixed gas G generated in the hydrogen generation reaction section 1 is sent to the separation section unit U20 when the valve V2 is opened and the pump P2 is driven. In the separation section unit U20, hydrogen is separated from carbon dioxide by repeating the following cycle, for example.

First, hydrogen is separated in the left separation section 20A in the first group Gr1; second, hydrogen is separated in the left separation section 20C in the second group Gr2; third, hydrogen is separated in the right separation section 20B in the first group Gr1; and fourth, hydrogen is separated in the right separation section 20D in the second group Gr2. In the second and later cycles, carbon dioxide in the water is deaerated in one separation section 20 while hydrogen is being separated in the other separation section 20 in the same group. Hereinafter, the hydrogen separation cycle will be described in detail.

### [Hydrogen separation in separation section 20A in first group]

First, in the separation section unit U20, ports of the three-way valves 3V and 3V₁₁ are switched so as to send the mixed gas G to the separation section 20A in the first group Gr1. On this occasion, in the first group Gr1, the water temperature adjustment mechanism 23 cools the left separation section 20A and heats the right separation section 20B, and the mixed gas G is sent to the cooled separation section 20A from below. In the meantime, the three-way valve 3V₁₂ permits communication between the separation section 20A and the line L43, and the three-way valve 3V₁₃ blocks communication between the right separation section 20B and the line L43. In the second group Gr2, on the other hand, the water temperature adjustment mechanism 23 does not adjust the temperatures of the separation sections 20C and 20D. The operation of the water temperature adjustment mechanism 23 will be described later in detail.

Since the solubility of carbon dioxide in water increases as the water temperature decreases, the water temperature adjustment mechanism 23 cools the water Wa in the separation sections 20 to 0 to 5°C, for example, and heats the same to 50 to 70°C, for example, for the deaeration.

The mixed gas G sent to the lowermost compartment of the water container 21 gathers into a layer form along a lower surface of the relevant filter 22a. As a result, the area where the mixed gas G spreading in a layer form contacts with the water (cooled water) Wa is increased, and therefore carbon dioxide in the mixed gas G is dissolved into the water efficiently. When the mixed gas contains moisture, the moisture is also taken into the water. In the meantime, hydrogen in the mixed gas G passes through the filter 22a to move into the next upper compartment. Some of the carbon dioxide in the mixed gas G is not dissolved into the water Wa in the lowermost compartment and passes through the filter 22a to move into the next upper compartment.

As illustrated in FIGs. 2 and 3, the hydrogen and the carbon dioxide that have passed through the filter 22a emerge on an upper surface of the filter 22a as small bubbles g, and the bubbles g ascend in the water apart from the filter 22a to adhere to a lower surface of the next filter 22a. Since bubbles of the carbon dioxide and the bubbles g of the mixed gas G containing the carbon dioxide ascend in the water, the contact interfaces between the carbon dioxide in the bubbles g and the water Wa are further increased to dissolve the carbon dioxide into the water Wa more efficiently. As the mixed gas G in contact with the water Wa sequentially passes through the plurality of compartments upward as described above, the carbon dioxide concentration in the mixed gas G decreases. As a result, hydrogen having a high purity is collected in the uppermost compartment to be sent out of the separation section 20 to the hydrogen destination through the lines L41b and L43.

### [Hydrogen separation in separation section 20C in second group]

Supply of the mixed gas G to each separation section 20 is controlled according to, for example, time so as to be stopped before the water Wa in the water container 21 is saturated with carbon dioxide.

Accordingly, at the time limit, ports of the three-way valves 3V and 3V₂₁ are switched so as to supply the mixed gas G to the left separation section 20C in the second group Gr2. At the same time, the water temperature adjustment mechanism 23 cools the left separation section 20C in the second group Gr2 and heats the right separation section 20D. Hydrogen is separated from carbon dioxide in the separation section 20C in the second group Gr2 in the same manner as in the separation section 20A in the first group Gr1. In the meantime, the three-way valve 3V₂₂ permits communication between the separation section 20C and the line L43, and the three-way valve 3V₂₃ blocks communication between the separation section 20D and the line L43.

In the first group Gr1, on the other hand, the water temperature adjustment mechanism 23 does not adjust the temperatures of the separation sections 20A and 20B. Accordingly, the temperatures of the water Wa in the separation section 20A cooled and the separation section 20B heated gradually return to normal temperature. Thereby, energy to be consumed by the temperature adjustment mechanism 23 to subsequently heat the separation section 20A and cool the separation section 20B is saved.

### [Hydrogen separation in separation section 20B in first group]

Next, ports of the three-way valves 3V and 3V₁₁ are switched so as to supply the mixed gas G to the right separation section 20B in the first group Gr1. At the same time, the water temperature adjustment mechanism 23 cools the separation section 20B in the first group Gr1 and heats the separation section 20A. While hydrogen is separated in the separation section 20B, carbon dioxide in the water vaporizes and passes through the filters 22a to collect the carbon dioxide in the uppermost compartment in the separation section 20A. In the meantime, the three-way valve 3V₁₃ permits communication between the separation section 20B and the line L43, and the three-way valve 3V₁₂ permits communication between the separation section 20A and the line L44. Accordingly, the hydrogen is supplied to the hydrogen destination through the line L43, and the carbon dioxide is emitted into the atmosphere through the line L44.

In the second group Gr2, on the other hand, the water temperature adjustment mechanism 23 does not adjust the temperatures of the separation sections 20C and 20D. Accordingly, the temperatures of the water Wa in the left separation section 20C cooled and the right separation section 20D heated gradually return to normal temperature. Thereby, energy to be consumed by the temperature adjustment mechanism 23 to subsequently heat the separation section 20C and cool the separation section 20D is saved.

### [Hydrogen separation in separation section 20D in second group]

Next, ports of the three-way valves 3V and 3V₂₁ are switched so as to supply the mixed gas G to the right separation section 20D in the second group Gr2. At the same time, the water temperature adjustment mechanism 23 cools the separation section 20D in the second group Gr2 and heats the separation section 20C. While hydrogen is separated in the separation section 20D, carbon dioxide in the water vaporizes and passes through the filters 22a to collect carbon dioxide in the uppermost compartment in the separation section 20C. In the meantime, the three-way valve 3V₂₃ permits communication between the separation section 20D and the line L43, and the three-way valve 3V₂₂ permits communication between the separation section 20C and the line L44. Accordingly, the hydrogen is supplied to the hydrogen destination through the line L43, and the carbon dioxide is emitted into the atmosphere through the line L44.

In the first group Gr1, on the other hand, the water temperature adjustment mechanism 23 does not adjust the temperatures of the separation sections 20A and 20B. Accordingly, the temperatures of the water Wa in the left separation section 20A cooled and the right separation section 20B heated gradually return to normal temperature.

Thus, hydrogen having a high purity is supplied sequentially from each separation section 20 to the hydrogen destination, and carbon dioxide is emitted sequentially from each separation section 20 into the atmosphere.

### [Operation of water temperature adjustment mechanism]

In the separation section unit U20, as described with reference to FIG. 3, hydrogen separation is performed in order of the separation section 20A in the first group Gr1, the separation section 20C in the second group Gr2, the separation section 20B in the first group Gr1, and the separation section 20D in the second group Gr2 in a repetitive manner.

Accordingly, the water temperature adjustment mechanism 23 illustrated in FIG. 4 performs cooling in order of the heat exchange section 23B₂ in the first group Gr1, the heat exchange section 23B₄ in the second group Gr2, the heat exchange section 23B₁ in the first group Gr1, and the heat exchange section 23B₃ in the second group Gr2 in a repetitive manner.

Hereinafter, the operation of the water temperature adjustment mechanism will be described in detail with reference to FIG. 4.

### [Cooling in heat exchange section 23B₂ in first group]

In the cooling in the heat exchange section 23B₂ in the first group Gr1, the compressor 23A is driven, and in response the heating medium is turned into a high temperature and pressure gas, and sent out in a direction of an arrow X to be discharged from above into the case 23Ba of the heat exchange section 23B₁ in the first group Gr1 through the first main line 23E₁. As a result, the high temperature and pressure gas is brought into contact with the separation section 20B to exchange heat with the separation section 20B. That is, the high temperature and pressure gas heats the separation section 20B and releases heat to be condensed into a high-pressure liquid to be sent to the expansion valve 23C₁ in the first line 23E₃. The high-pressure liquid is turned into a low-pressure liquid while passing through the expansion valve 23C₁, and the low-pressure liquid is introduced into the case 23Da of the separation section 20A from below. As a result, the low-pressure liquid is brought into contact with the separation section 20A to exchange heat with the separation section 20A. That is, the low-pressure liquid cools the separation section 20A and absorbs heat to be evaporated into a low-pressure gas to be sent to the compressor 23A through the second main line 23E₂.

### [Cooling in heat exchange section 23B₄ in second group]

In the cooling in the heat exchange section 23B₄ in the second group Gr2, the high temperature and pressure gas from the compressor 23A is discharged from above into the case 23Ba of the heat exchange section 23B₃ in the second group Gr2 through the first main line 23E₁. As a result, the high temperature and pressure gas is brought into contact with the separation section 20D and exchanges heat with the separation section 20D to be turned into a high-pressure liquid and heat the separation section 20D. The high-pressure liquid is then turned into a low-pressure liquid while passing through the expansion valve 23C₂ in the second line 23E₄, and the low-pressure liquid is introduced into the case 23Da of the separation section 20C from below. As a result, the low-pressure liquid exchanges heat with the separation section 20C to be turned into a low-pressure gas and cool the separation section 20C. Then, the low-pressure gas is sent to the compressor 23A through the second main line 23E₂.

### [Cooling in heat exchange section 23B₁ in first group]

In the cooling in the heat exchange section 23B₁ in the first group Gr1, the high temperature and pressure gas from the compressor 23A is discharged from above into the case 23Da of the heat exchange section 23B₂ in the first group Gr1 through the first main line 23E₁, the first bypass line 23E₅, and then the second main line 23E₂. As a result, the high temperature and pressure gas is brought into contact with the separation section 20A and exchanges heat with the separation section 20A to be turned into a high-pressure liquid and heat the separation section 20A. The high-pressure liquid is then turned into a low-pressure liquid while passing through the expansion valve 23C₁ in the first line 23E₃, and the low-pressure liquid is introduced into the case 23Ba of the separation section 20B from below. As a result, the low-pressure liquid exchanges heat with the separation section 20B to be turned into a low-pressure gas and cool the separation section 20B. Then, the low-pressure gas is sent to the compressor 23A through the first main line 23E₁, the second bypass line 23E₆, and then the second main line 23E₂.

### [Cooling in heat exchange section 23B₃ in second group]

In the cooling in the heat exchange section 23B₃ in the second group Gr2, the high temperature and pressure gas from the compressor 23A is discharged from above into the case 23Da of the heat exchange section 23B₄ in the first group Gr1 through the first main line 23E₁, the first bypass line 23E₅, and then the second main line 23E₂. As a result, the high temperature and pressure gas is brought into contact with the separation section 20C and exchanges heat with the separation section 20C to be turned into a high-pressure liquid and heat the separation section 20C. The high-pressure liquid is then turned into a low-pressure liquid while passing through the expansion valve 23C₂ in the second line 23E₄, and the low-pressure liquid is introduced into the case 23Ba of the separation section 20D from below. As a result, the low-pressure liquid exchanges heat with the separation section 20D to be turned into a low-pressure gas and cool the separation section 20D. Then, the low-pressure gas is sent to the compressor 23A through the first main line 23E₁, the second bypass line 23E₆, and then the second main line 23E₂.

When the inside of the fuel cell vehicle C (see FIG. 6) is cooled, the heating medium of the air conditioner passes through a route of the compressor 23A, the outdoor heat exchange section 41, the expansion valve 42, the indoor heat exchange section 43 and the compressor 23A in this order. At this time, the indoor heat exchange section 43 sends cool air to the inside of the car. On the other hand, when the inside of car is warmed, the heating medium of the air conditioner passes through a route of the compressor 23A, the indoor heat exchange section 43, the expansion valve 42, the outdoor heat exchange section 41 and the compressor 23A in this order. At this time, the indoor heat exchange section 43 sends warm air to the inside of the car.

In the fuel cell vehicle C illustrated in FIG. 6 including the hydrogen generation system due to the present invention, the fuel cell FB does not generate power until hydrogen is generated by the hydrogen generation system and supplied to the fuel cell FB. In the meantime, therefore, the power from the secondary battery B is supplied to the hydrogen generation system for operating the same and to motors (wheel-in motors in FIG. 6) for driving the fuel cell vehicle C. Then, when hydrogen is supplied to the fuel cell FB, and the fuel cell FB starts power generation, the power supply from the secondary battery B to the hydrogen generation system and the motors is stopped, and power is supplied from the fuel cell FB to the hydrogen generation system and the motors. While the car is running, the braking energy is converted into power to charge the secondary battery B, and the surplus power from the fuel cell FB is accumulated in the secondary battery B.

FIG. 7 is the first diagram illustrating an example of an operation flow of a hydrogen generation system due to the present invention in the hydrogen fuel vehicle illustrated in FIG. 6. FIG. 8 is the second diagram illustrating some steps included in the operation flow shown in FIG. 7. FIG. 9 is the third diagram illustrating some steps included in the operation flow shown in FIG. 7. Hereinafter, an example of the operation flow of the hydrogen generation system due to the present invention in the hydrogen fuel vehicle illustrated in FIG. 6 will be described with reference to FIGs. 7 to 9. The operation flow of a hydrogen fuel vehicle including a hydrogen engine is the same as the operation flow illustrated in FIGs. 7 to 9.

First, when the operation switch of the hydrogen generation system is turned on, power is supplied to the heater and each sensor to perform initiation for activating the hydrogen generation reaction section, the separation section and the formic acid storage section, and at the same time, activate each line. Then, in the hydrogen generation reaction section, formic acid is decomposed into hydrogen and carbon dioxide while the liquid mixture of formic acid and an ionic liquid is being heated. The hydrogen generation system may be configured to reject turning on of the operation switch unless a key to the hydrogen fuel vehicle is inserted in a key hole at the driver's seat and turned on, for example.

Next, when the operation switch is on, and the fuel cell is not in operation, hydrogen is not yet supplied from the hydrogen generation system to the fuel cell, and therefore power is supplied from the secondary battery to the motors to allow driving of the hydrogen fuel vehicle. When the fuel cell is in operation, the power supply from the secondary battery to the motors is stopped. When the operation switch is turned off, the power supply to the heater and each sensor is stopped to perform halt for deactivating the hydrogen generation reaction section, the separation section and the formic acid storage section, and at the same time, deactivate each line.

In the hydrogen generation reaction section, in the meantime, the reaction temperature and the formic acid concentration are maintained at specified values as follows.

For example, when the reaction temperature in the hydrogen generation reaction section is higher than the specified value by more than 5°C, the heater is stopped, and when the reaction temperature is lower than the specified value by more than 5°C, the current of the heater is increased (see FIG. 8).

When the liquid level of the liquid mixture of formic acid and an ionic liquid in the hydrogen generation reaction section is higher than a specified upper limit, the supply of formic acid from the formic acid storage section to the hydrogen generation reaction section is stopped, and when the liquid level is lower than a specified lower limit, the supply of formic acid is increased (see FIG. 9).

The hydrogen generation system may be configured to be stopped as optional interrupt processing if an abnormal event occurs in the hydrogen generation reaction section in operation such as, for example, an abnormal ratio of the formic acid in the liquid mixture, an abnormal hydrogen concentration, an abnormal carbon dioxide concentration and an abnormal pressure of the mixed gas of hydrogen and carbon dioxide. In preparation for such an abnormal event, therefore, the hydrogen generation reaction section may be provided with a hydrogen sensor, a carbon dioxide sensor, a pressure sensor, and the like.

For stopping the fuel cell vehicle C, the operation switch of the hydrogen generation system is turned off to stop the application of current to the heater 2 in the hydrogen generation reaction section 1. However, the hydrogen generation through the decomposition of formic acid in the reactor 1a does not stop until the liquid mixture FI of formic acid and an ionic liquid naturally cools down to a specified temperature (for example, 40°C) or lower. It is therefore preferable to stop the supply of formic acid and continue the rotation of each spreading wall 3a, the supply of the mixed gas G to the separation section unit U20, the operation of the separation section unit U20, the supply of hydrogen from the separation section unit U20 to the fuel cell FB, and the accumulation in the secondary battery B of surplus power generated by the fuel cell FB to which hydrogen has been supplied, until the hydrogen generation in the reactor 1a stops.

While the fuel cell vehicle C is running, carbon dioxide and water (including steam) are emitted. The carbon dioxide is of formic acid origin, and when the formic acid is produced by using carbon dioxide emitted from a chemical plant, for example, the carbon dioxide emitted from the fuel cell vehicle C is not additional. Since the fuel of the fuel cell vehicle C is formic acid stored in the formic acid storage section 30, formic acid can be supplied according to the remaining formic acid level. In order to widely spread the fuel cell vehicle C using formic acid as its fuel, it is desired to provide formic acid stations as refueling facilities along general roads and to express highway rest areas like gas stations.

Formic acid to supply to the hydrogen generation reaction section of the hydrogen generation system due to the present invention may be generated by any method, and may be generated by reacting hydrogen and carbon dioxide in the presence of an ionic liquid, for example. In this case, a formic acid generation apparatus may be installed in a plant emitting hydrogen and carbon dioxide, for example, and the hydrogen and the carbon dioxide may be supplied to the formic acid generation apparatus to generate formic acid, and the formic acid generated may be carried to the formic acid stations by a tank lorry. Thus, the present invention can be used for carbon dioxide fixation. When the hydrogen generation system due to the present invention and a fuel cell or a hydrogen turbine are installed in a formic acid station, formic acid can be supplied from the formic acid station to the hydrogen generation system, and hydrogen generated by the hydrogen generation system can be supplied to the fuel cell or the hydrogen turbine to generate power. When the hydrogen generation system is installed along with a commercial or household fuel cell, it is possible to generate power in a building or a house.

### (Embodiment 2)

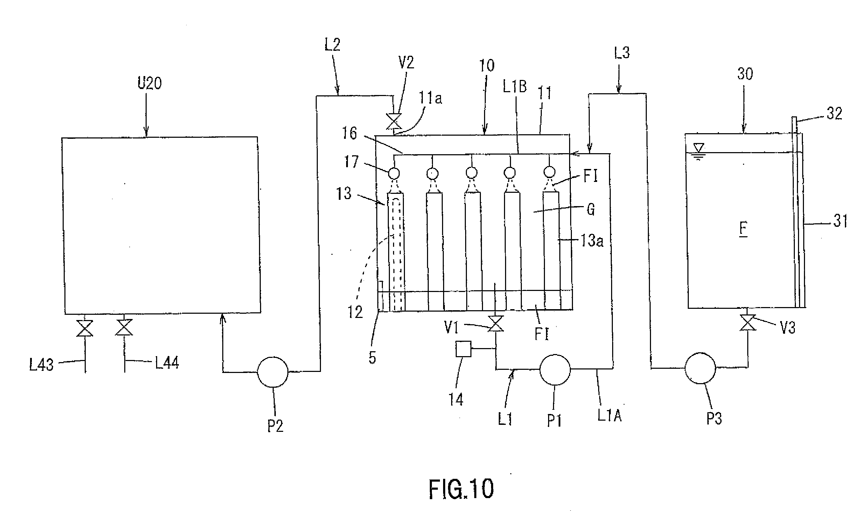

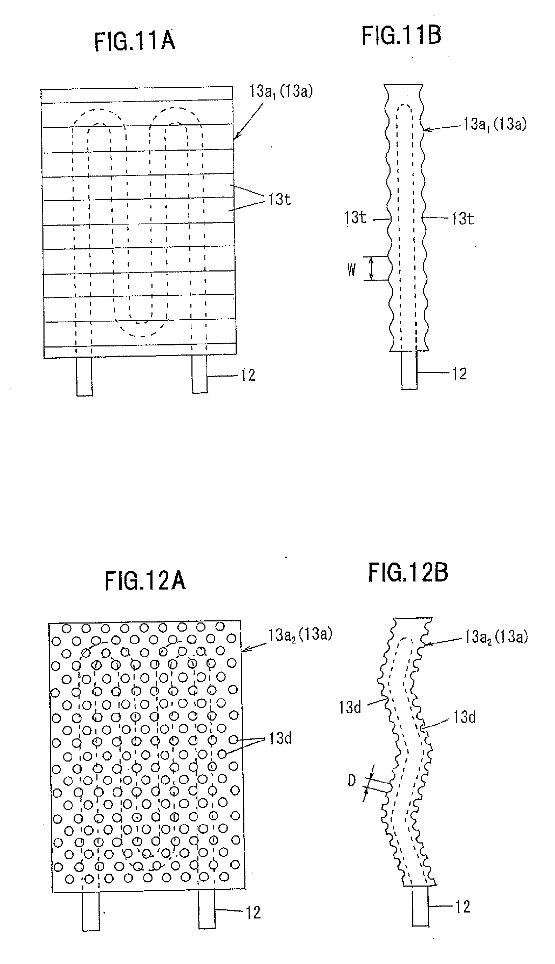

FIG. 10 is a schematic configuration diagram illustrating Embodiment 2 of the hydrogen generation system due to the present invention. FIG. 11A is a side view illustrating a configuration of a spreading section in Embodiment 2 of the hydrogen generation system, and FIG. 11B is a front view of the spreading section. FIG. 12A is a side view illustrating a configuration of another spreading section in a hydrogen generation reaction section in Embodiment 2 of the hydrogen generation system, and FIG. 12B is a front view of the spreading section. In FIG. 10, the same components as those in FIG. 1 are represented by the same reference numerals.

Embodiment 2 of the hydrogen generation system has the same configurations as Embodiment 1 except for the configuration of the hydrogen generation reaction section. Hereinafter, differences of Embodiment 2 from Embodiment 1 will be described mainly.

Specifically, a hydrogen generation reaction section 10 includes a hermetically-sealable reactor 11, heaters 12, a spreading section 13 and a liquid circulation line L1.

The reactor 11 is similar to the reactor 1a of Embodiment 1, and has a mixture outlet 11a for sending out the mixture of hydrogen and carbon dioxide generated therein toward the separation section 20.

In the case of Embodiment 2, the spreading section 13 has a plurality of spreading walls 13a erected in parallel in the reactor 11.

As illustrated in FIGs. 11 and 12, both the right and left side surfaces of each spreading wall 13a are thoroughly rough thereby to increase the surface area of the spreading wall 13a. In the case of FIGs. 11A and 11B, the whole areas of both the side surfaces of a spreading wall 13a₁ are provided with a plurality of grooves 13t having a width W of, for example, approximately 1 to 10 mm and extending in the horizontal direction into a stripe state to form the rough surfaces. Instead of the grooves 13t, projections may be provided. In the case of FIGs. 12A and 12B, both the side surfaces of a spreading wall 13a₂ bent into a shallow W shape are provided with a plurality of hemispheric recesses 13d having a diameter D of, for example, approximately 1 to 10 mm to form the roughness surfaces. Instead of the recesses 13d, projections may be provided.

The heaters 12 heat the liquid mixture FI of formic acid and an ionic liquid in the reactor 11. In the case of Embodiment 2, the heaters 12 are M-shaped sheathed heaters, provided in the respective spreading walls 13a.

In this case, each spreading wall 13a having a hollow and flat shape with an opening at a lower part is formed of a ceramic material, for example, and one heater 12 is inserted in each spreading wall 13a through the opening. Furthermore, in order to prevent the heater 12 from corrosion with formic acid, a filler such as, for example, a paste prepared by mixing sand and a thermosetting resin is poured into the spreading wall 13a and thermally cured. Thereby, the heater 12 can be fixed in the spreading wall 13a and prevented from corrosion due to contact with formic acid. In addition, the reactor 11 is provided with through holes in the bottom wall thereof at positions in which each spreading wall 13a is attached. In the respective through holes, both the ends of each heater 12 are inserted, and both the ends of the heater 12 and the bottom wall are welded and fixed so as to prevent liquid leak.

The liquid circulation line L1 pumping up the liquid mixture FI of formic acid and an ionic liquid staying at the bottom of the reactor 11 and discharges the liquid mixture to an upper part of each spreading wall 13a. In the case of Embodiment 2, the liquid circulation line L1 includes a circulation pipe L1A and a discharge section L1B provided to an upper part in the reactor 11.

The circulation pipe L1A is provided with a valve V1, a temperature sensor 14 for detecting the temperature of the liquid mixture FI of formic acid and an ionic liquid, and a pump P1 on its way. The pump P1 is not particularly limited, and a corrosion-resistant rotary pump is preferable when the ionic liquid is highly viscous.

The bottom wall of the reactor 11 further has a through hole in which an upstream end of the circulation pipe L1A is inserted in a liquid-tight manner to project into the reactor 11. The upstream end of the circulation pipe L1A is disposed above an upper limit of the liquid level of the liquid mixture FI of formic acid and an ionic liquid. Furthermore, the upstream end of the circulation pipe L1A has an introduction port in a lengthwise slit shape for introducing both the ionic liquid and formic acid even when the liquid mixture FI is separated to have a lower layer of the ionic liquid and an upper layer of the formic acid. The circulation pipe L1A may be provided with a valved discharge pipe, not shown, for discharging old ionic liquid out of the reactor 11 at a downstream side relative to the pump P1.

The discharge section L1B includes a center pipe 16 connected to a downstream end of the circulation pipe L1A and a plurality of branch pipes 17 diverging from the center pipe 16 and arranged in parallel above an upper end of each spreading wall 13a. The branch pipes 17 each have a plurality of discharge holes along the longer direction for discharging the liquid mixture FI of formic acid and an ionic liquid.

When the hydrogen generation reaction section 10 is in operation, each heater 12 generates heat to heat each spreading wall 13a. In the meantime, the valve V1 is opened and the pump P1 is driven, so that the liquid mixture FI of formic acid and an ionic liquid in the reactor 11 is drawn into the liquid circulation line L1, and the liquid mixture FI of formic acid and an ionic liquid is discharged from each branch pipe 17 of the discharge section L1B to the upper end of each spreading wall 13a. Thereby, the liquid mixture FI of formic acid and an ionic liquid runs downward along the right and left side surfaces (rough surfaces) of each spreading wall 13a heated, and the liquid mixture FI of formic acid and an ionic liquid collected at the bottom of the reactor 11 is drawn into the liquid circulation line L1 to reach the upper part of the reactor 11 again and discharged to the upper end of each spreading wall 13a as described above. Thus, the liquid mixture FI of formic acid and an ionic liquid is continuously circulated in the hydrogen generation reaction section 10 to be heated by each heater 12 to a temperature range of normal temperature to 200°C while running along the right and left rough surfaces of each spreading wall 13a.

According to Embodiment 2, it is possible to directly heat the side surfaces of the spreading walls 13a where the hydrogen generation efficiency is the highest in the hydrogen generation reaction section 10, and therefore the hydrogen generation efficiency is more improved, and the thermal efficiency is also improved. The heaters 12 may be provided not only in the spreading walls 13a but at the bottom of the reactor 11 and in the liquid circulation line L1, for example.

### (Embodiment 3)

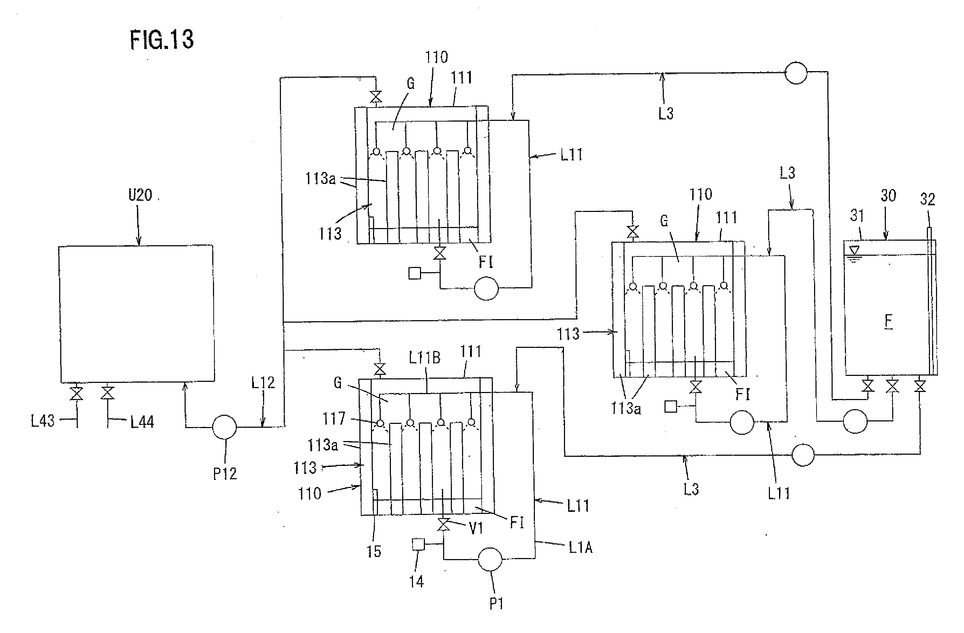

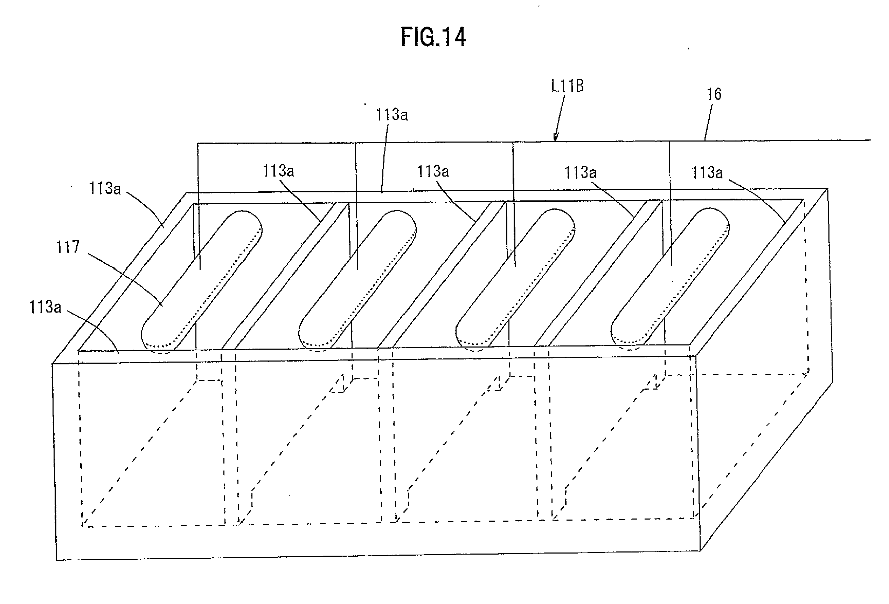

FIG. 13 is a schematic configuration diagram illustrating Embodiment 3 of the hydrogen generation system due to the present invention. FIG. 14 a schematic perspective view illustrating a hydrogen generation reaction section in Embodiment 3 of the hydrogen generation system (top panel not shown). In FIGs. 13 and 14, the same components as those in FIG. 10 are represented by the same reference numerals, and description thereof will be omitted.

Embodiment 3 has the same configurations as Embodiment 2 except mainly for the configuration and the number of hydrogen generation reaction sections 110. Hereinafter, differences of Embodiment 3 from Embodiment 2 will be described mainly.

Embodiment 3 of the hydrogen generation system includes three hydrogen generation reaction sections 110. In this configuration, formic acid is supplied from one formic acid storage section 30 to the respective hydrogen generation reaction sections 110 through the respective pipe lines L3, and the mixed gas G containing hydrogen and carbon dioxide is supplied from the respective hydrogen generation reaction sections 110 to the separation section unit U20 through a pipe line L12. The hydrogen generation reaction sections 110 have the same configuration. The pipe line L12 is provided with a pump P12 at a side of a downstream end connected to the separation section unit U20 and diverges into three pipes at an upstream side relative to the pump 12 to be connected to the respective hydrogen generation reaction sections 110 via valves.

The hydrogen generation reaction sections 110 each include a hermetically-sealable reactor 111, heaters, not shown, a spreading section 113 and a liquid circulation line L11. In this case, spreading walls 113a in each spreading section 113 form enclosing walls and partitions of each reactor 111, and the heaters are provided in the respective spreading walls 113a. Preferably, inner surfaces of the spreading walls 113a forming the enclosing walls of the reactor 11 and both surfaces of each spreading wall 113a forming a partition are rough surfaces (see FIGs. 11 and 12).

In the case of Embodiment 3, the liquid circulation lines L11 each have a discharge section L11B, and the discharge section L11B includes one center pipe 16 connected to a downstream end of the circulation pipe L1A and a plurality of branch pipes 117 diverging from the center pipe 16 and arranged in parallel near a side surface of an upper end of each spreading wall 13a. The branch pipes 117 each have a plurality of discharge holes along the longer direction and the shorter direction for spraying or atomizing the liquid mixture FI of formic acid and an ionic liquid. That is, the discharge sections L11B in Embodiment 3 are suitable for the case where an ionic liquid having low viscosity is circulated.

In the hydrogen generation reaction section 110 of Embodiment 3, the liquid mixture FI of formic acid and an ionic liquid in the form of droplets or mist is released from the branch pipes 117 into the reactors 111 to adhere to upper parts of the side surfaces of the respective spreading walls 113a. The liquid mixture FI of formic acid and an ionic liquid that has adhered to the upper parts of the side surfaces the respective spreading walls 113a are then heated while running along the side surfaces, during which the formic acid in the liquid mixture FI is decomposed to generate the mixed gas G containing hydrogen and carbon dioxide.

According to Embodiment 3, the liquid mixture FI of formic acid and an ionic liquid has an increased surface area by running along the side surfaces of the spreading walls 113a, and besides the liquid mixture FI of formic acid and an ionic liquid has a more increased surface area by being released in the form of droplets or mist from the branch pipes 117. As a result, hydrogen can be generated with higher efficiency. In addition, since the enclosing walls constituting each reactor 111 are used as the spreading walls 113a, the number of partitions can be reduced to downsize the reactor 111. Furthermore, the amount of hydrogen to be generated is significantly increased because of the plurality of hydrogen generation reaction sections 110.

### (Embodiment 4)

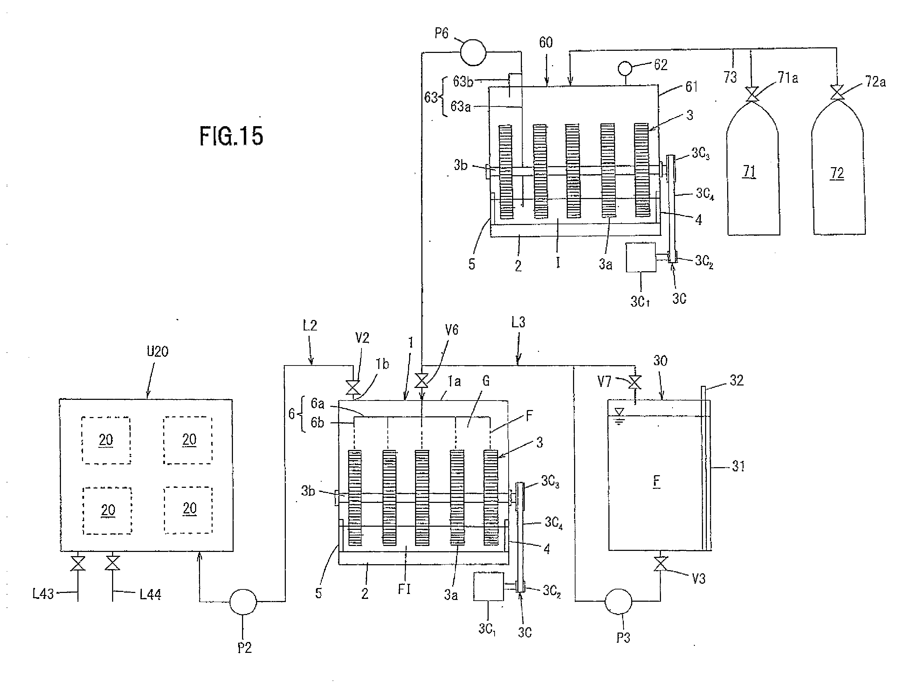

FIG. 15 is a schematic configuration diagram illustrating Embodiment 4 of the hydrogen generation system due to the present invention. In FIG. 15, the same components as those in FIG. 1 are represented by the same reference numerals, and description thereof will be omitted.

Embodiment 4 has the same configurations as Embodiment 1 except that the hydrogen generation system is provided with a formic acid synthesis reaction section.

Specifically, a formic acid synthesis reaction section 60 in Embodiment 4 of the hydrogen generation system includes a hermetically-sealable reactor 61 for containing an ionic liquid 1, a heater 2 for heating the ionic liquid I, a spreading section 3 for expanding the surface area of the ionic liquid I, a temperature sensor 4 for detecting the temperature of the ionic liquid I, and a level sensor 5 for detecting the liquid level of the ionic liquid I. As in the case of the hydrogen generation reaction section 1, the formic acid synthesis reaction section 60 of Embodiment 4 is suitable for the case where the ionic liquid I to use has high viscosity. When the ionic liquid has high viscosity, formic acid synthesized is likely to stay on the ionic liquid I, and therefore the level sensor 5 will detect the liquid level of formic acid on the ionic liquid I.

The reactor 61 is a pressure-resistant container formed into a rectangular parallelepiped for containing the ionic liquid I. The reactor 61 is formed of an inner vessel made of a ceramic material and an outer vessel made of stainless steel, for example. In addition, the reactor 61 has a manometer 62 for determining the inner pressure of the reactor and an outlet section 63 for sending out the formic acid synthesized in the reactor. The reactor 61 may be covered with a heat insulating material to reduce escape of heat in the reactor 61.

The reactor 61 is connected to a hydrogen cylinder 71 as a source of hydrogen and a carbon dioxide cylinder 72 as a source of carbon dioxide through a gas supply pipe 73, and hydrogen and carbon dioxide as raw materials of formic acid are supplied into the reactor 61 at a predetermined pressure ratio. The hydrogen cylinder 71 and the carbon dioxide cylinder 72 have pressure regulating valves 71a and 72a, respectively.

The outlet section 63 is configured to have, for example, a long delivery pipe 63a and a short delivery pipe 63b that are penetrating an upper wall of the reactor 61 so as to send out a formic acid solution or formic acid gas in the reactor 63 to an exterior. The short delivery pipe 63b may be provided with a shut-off valve.

Specifically, the long delivery pipe 63a is disposed so that a lower end thereof opens in the formic acid solution staying on the ionic liquid I in the reactor 61. On the other hand, the short delivery pipe 63b is disposed above the liquid level of the formic acid solution staying on the ionic liquid I in the reactor 61. The long delivery pipe 63a and the short delivery pipe 63b have ends projecting out of the reactor 61, each of which is connected to an upstream end of a pipe line L6 having a pump P6 and a valve V6. The pipe line L6 has a downstream end connected to the discharge section 6 in the hydrogen generation reaction section 1. The pipe line L3 for supplying the formic acid F from the formic acid storage section 30 to the hydrogen generation reaction section 1 diverges into two branch pipes in different directions, one of which is connected to the pipe line L6 at an upstream side relative to the valve V6, and the other is connected to the storage tank 31 in the formic acid storage section 30 via a valve V7.

In the formic acid synthesis in the formic acid synthesis reaction section 60, hydrogen and carbon dioxide are reacted in the presence of the ionic liquid I by introducing hydrogen and carbon dioxide in the reactor 61, and bringing the mixed gas G of hydrogen and carbon dioxide into contact with a surface of the ionic liquid I. At this time, as described in Embodiment 1, the surface area of the ionic liquid I is expanded by the rotation of each spreading wall 3a in the spreading section 3 to increase the area where the mixed gas G contacts with the ionic liquid I. At this time, the pressure of the hydrogen in the reactor 61 is set at, for example, 5 to 50 bar, and the pressure of the carbon dioxide is set at, for example, 1 to 50 bar. The reaction temperature is not particularly limited as long as the temperature allows the ionic liquid I to stay in a liquid state, and it is preferable to raise the temperature to normal temperature or more in order to generate formic acid efficiently. In this case, the upper limit of the reaction temperature is 200°C, preferably 150°C, and more preferably 100°C, because a too high temperature may cause degradation of the ionic liquid and reduce the amount of formic acid to be generated due to a thermodynamic reason. The reaction time is 1 hour to 300 hours, for example.

When the formic acid (formic acid solution) synthesized as described above is accumulated on the ionic liquid I in the reactor 61, the valve V6 or the valve V7 may be opened, and the pump P6 may be driven to send the formic acid solution out of the reactor 61 to the hydrogen generation reaction section 1 or the formic acid storage section 30. Alternatively, the formic acid may be distilled. That is, the formic acid solution may be heated with the ionic liquid I by the heater 2 in the formic acid synthesis reaction section 60 to generate formic acid gas, and the formic acid gas may be liquefied while the formic acid gas sent to the hydrogen generation reaction section 1 or the formic acid storage section 30 through the pipe line L6.

Instead of the gas cylinders, hydrogen and carbon dioxide emitted from an industrial plant may be directly supplied to the formic acid synthesis reaction section 60. In this case, hydrogen and carbon dioxide cannot be supplied to the formic acid synthesis reaction section 60 during the synthesis and the delivery of formic acid, and it is therefore preferable to provide a plurality of formic acid synthesis reaction sections 60 so that hydrogen and carbon dioxide can be supplied to any of the plurality of formic acid synthesis reaction sections 60.

### <Other embodiments>

1. The spreading section in Embodiment 2 and/or the spreading section in Embodiment 3 may be used instead of the spreading section in the hydrogen generation reaction section and/or the spreading section in the formic acid synthesis reaction section in Embodiment 4.
2. A gas venting line may be provided via a pressure valve at appropriate positions such as, for example, the reactor 11 in the hydrogen generation reaction section 10, the water container 21 in each separation section 20 and the lines in the hydrogen generation system to discharge the hydrogen to the line L43 and the carbon dioxide to the line L44 through the gas venting line or safely emit the gases into the atmosphere through the gas venting line before the mixed gas G, the hydrogen and/or the carbon dioxide inappropriately fill these positions and the pressure reaches a dangerous level. Further, the gas venting line may be provided with a gas sensor, and the control panel or the driver's seat is provided with an alarming device (for example, alarm lamp, alarm member and display screen), so that detection signals from the gas sensor are transmitted to the control section when the gases flow through the gas venting line, and the control section activates the alarming device to inform an operator of an abnormal event.
3. In Embodiment 1, by way of example, four separation sections 20 are provided to separate the mixed gas G into hydrogen and carbon dioxide efficiently. However, the number of the separation sections 20 is not particularly limited and may be one, two or three. Alternatively, five or more separation sections 20 may be provided to separate the mixed gas G into hydrogen and carbon dioxide more efficiently.
4. The separation section unit U20 described in Embodiment 1 may be provided with a hydrogen separating film made of a ceramic film, metal film or the like at opposite ends of the lines L41b and L42b for sending the H₂ (near the three-way valves). Thereby, hydrogen having a higher purity can be supplied to the hydrogen destination.
5. Since the fuel cell or the hydrogen engine in the mobile described in Embodiment 1 generates heat when in operation, the thermal energy thereof may be used to heat the liquid mixture of formic acid and an ionic liquid in the hydrogen generation reaction section. For example, a heat exchanging system may be provided between the fuel cell or the hydrogen engine and the hydrogen generation reaction section so that the fuel cell or the hydrogen engine with the heat is cooled with a heating medium (cooling water), and the heat absorbed by the heating medium is transferred to the liquid mixture of formic acid and an ionic liquid in the hydrogen generation reaction section. Thereby, power consumption by the heater in the hydrogen generation reaction section can be reduced, and cooling for improving the operating efficiency of the fuel cell or the hydrogen engine can be performed.

The following examples further illustrate the present invention, but do not limit the present invention.

As the ionic liquid to use in the present invention, the following different kinds of ionic liquids (purity: 99%) manufactured by Koei Chemical Co., Ltd. were used. Prior to use, these ionic liquids were heated (120°C) and dried under vacuum for 12 hours after acquisition.

### (Method of fundamental experiment to examine most suitable ionic liquid, most suitable mixing ratio, durability, and so on)

Specifically, the ionic liquids may be
(1) tetra-n-butylphosphonium nitrate,
(2) tri-n-hexyl-n-tetradecylphosphonium chloride and
(3) tetraphenylphosphonium formate.

Of the ionic liquids (1) to (3), an ionic liquid suitable for the decomposition reaction of formic acid was determined by the following method.

The ionic liquids (1) and (3) are solid at room temperature and therefore samples thereof were measured for various NMR spectra after heated to melt the ionic liquids in an NMR probe.

### (Example 1)

In a dry box filled up with nitrogen gas, 0.29 ml of a mixture of a commercially available aqueous solution of formic acid (purity: 95%) manufactured by Nacalai Tesque, Inc, Japan, and the ionic liquid (1) previously dried (mole ratio of formic acid to ionic liquid (1) = 0.6:1) were fed into a silica tube (0.49 mL in capacity) having a size of 10 cm in length x 2.5 mm in inner diameter, and the silica tube was sealed by using a gas burner to prepare a sample.

The sample was placed in an electric furnace set at 200°C (+1°C) for 14 hours for the decomposition reaction of formic acid and cooled with water immediately after the reaction. Then, while the sample was left sealed, the gas phase and the liquid phase thereof were observed at room temperature with an NMR (¹H- and ¹³C-).

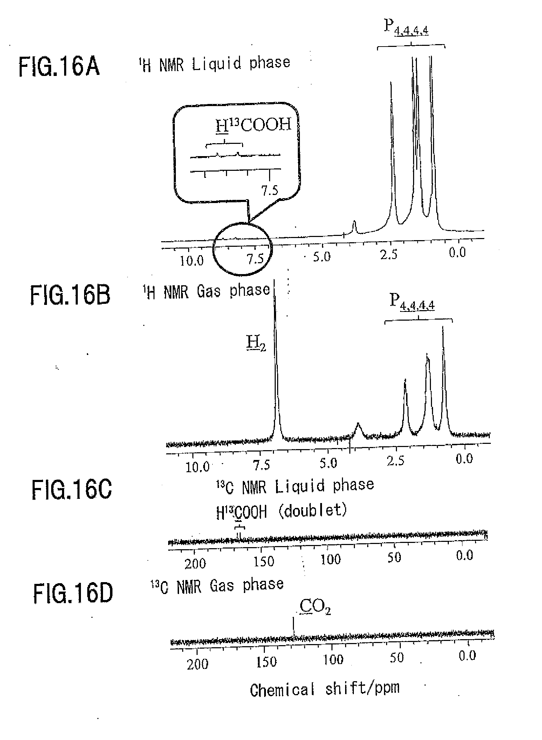

FIGs. 16A to 16D show NMR spectra of the sample of Example 1.

After the observation, the sample was taken out of the NMR and returned to the electric furnace. The abovementioned steps were repeated to study the formic acid decomposition rate and the hydrogen yield (purity).

As a result, the formic acid decomposition rate was 98%, and the hydrogen yield was 99%. In each example, as the concentration of the formic acid or each reaction product after the reaction, an absolute concentration value was determined from a ratio of the peak area between the peak of the formic acid before the reaction and the peak of the formic acid or each reaction product after the reaction based on a peak (¹H- and ¹³C- NMR) area of formic acid having a known concentration that was weighed before the reaction. Hydrogen, carbon dioxide and carbon monoxide were distributed between the gas phase and the liquid phase. Accordingly, each of them was measured both in the gas phase and the liquid phase and a total of the results was determined as a yield. Since one molecule of formic acid was decomposed into one molecule of hydrogen and one molecule of carbon dioxide, the hydrogen yield and the carbon dioxide yield were equal. Hereinafter, in some of the examples, the hydrogen yield was determined from the carbon dioxide yield and described by using the spectra.

### (Example 2)

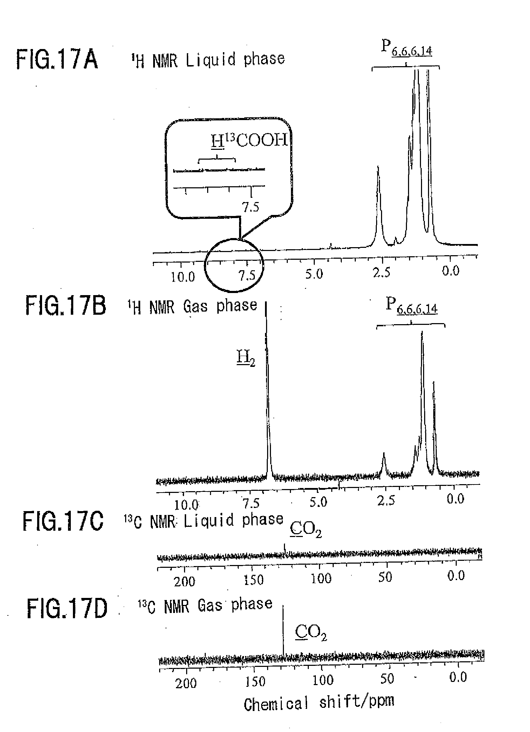

The same steps as in Example 1 were followed except that the ionic liquid (2) was used instead of the ionic liquid (1) used in Example 1. FIGs. 17A to 17D show NMR spectra of the sample of Example 2.

As a result, the formic acid decomposition rate was 99% or more, and the hydrogen yield was 88%.

### (Example 3)

The same steps as in Example 1 were followed except that the ionic liquid (3) was used instead of the ionic liquid (1) used in Example 1.

As a result, the formic acid decomposition rate was 98%, and the hydrogen yield was 99%.

The results obtained as described above have confirmed that the ionic liquids (1), (2), and (3) are suitable for hydrogen generation. The ionic liquids (1), (2), and (3) can be used for the hydrogen generation system due to the present invention.

The experimental results have also indicated that selection of a small anion producing the strongest electric field is a necessary condition that influences the formic acid decomposition efficiency and the hydrogen yield (purity), though a bulky cation is secondarily needed for the electric field formation.

### (Most suitable mixing ratio between formic acid and ionic liquid)

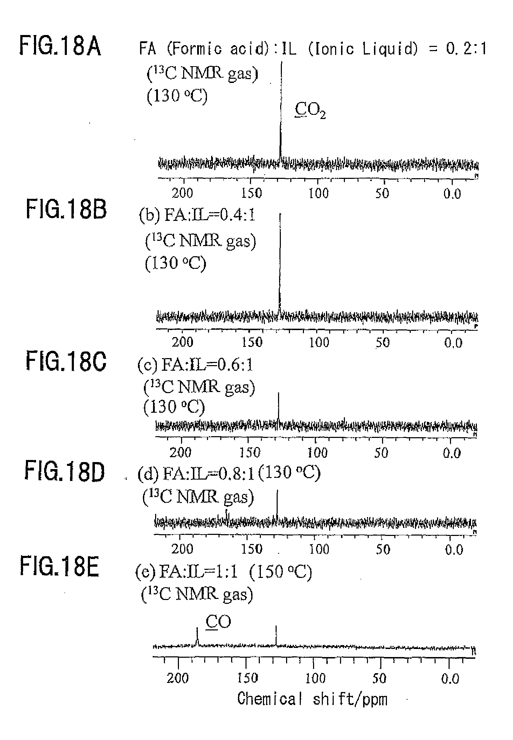

In Examples 4 to 8, the ionic liquid (2) was used to examine the most suitable mixing ratio between formic acid and the ionic liquid. The NMR spectra shown in FIGs. 18A to 18E correspond to Examples 4 to 8, respectively.

### (Example 4)

A mixture of formic acid and the ionic liquid (2) in an amount of 0.29 mL (mole ratio: 0.2:1) was fed into a silica tube, which was then sealed, and reacted for 60 minutes in an electric furnace maintained at 130°C. After the reaction, NMR observation was performed to study the hydrogen yield (purity).

As a result, the hydrogen yield was 99% or more, and it was found that carbon monoxide and water were hardly generated.

### (Example 5)

The same steps as in Example 4 were followed except that the mixing ratio by mole between the formic acid and the ionic liquid (2) was changed to 0.4:1.

As a result, the hydrogen yield was 99% or more, and it was found that carbon monoxide and water were hardly generated.

### (Example 6)

The same steps as in Example 4 were followed except that the mixing ratio by mole between the formic acid and the ionic liquid (2) was changed to 0.6:1.

As a result, the hydrogen yield was 99% or more, and it was found that carbon monoxide and water were hardly generated.

### (Example 7)

The same steps as in Example 4 were followed except that the mixing ratio by mole between the formic acid and the ionic liquid (2) was changed to 0.8:1.

As a result, the hydrogen yield was 99% or more, and it was found that carbon monoxide and water were hardly generated.

### (Example 8)

The same steps as in Example 4 were followed except that the mixing ratio by mole between the formic acid and the ionic liquid (2) was changed to 1:1, the reaction temperature was changed to 150°C, and the reaction time was changed to 14 hours. The temperature was changed to 150°C and the reaction time was changed to 14 hours, because formic acid was not decomposed when the formic acid and the ionic liquid (2) at a mixing ratio by mole of 1:1 were reacted at 130°C for 60 minutes.

As a result, the hydrogen yield decreased to 40%, and accordingly the yield of carbon monoxide and water increased.

### (Example 9)

The durability of the ionic liquid (2) was examined as follows.

A mixture of formic acid and the ionic liquid (2) in an amount of 0.29 mL (mole ratio: 0.6:1) was fed into a silica tube, which was then sealed, and reacted for 80 hours in an electric furnace maintained at 200°C. Thereafter, the ionic liquid (2) after the reaction was observed by NMR and the NMR spectrum obtained was compared with the NMR spectrum of the ionic liquid (2) before the reaction to see presence/absence of a peak of any substance other than the products of the formic acid decomposition reaction to determine the durability of the ionic liquid (2).

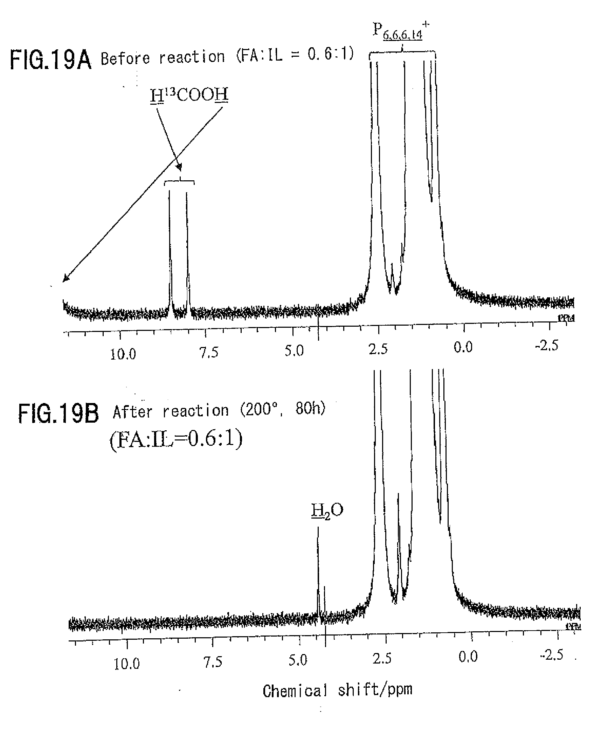

As shown in FIG. 19, the proton NMR spectra were enlarged 200 times to see presence/absence of any minute peak, but no peak change was found other than those of the products of the formic acid decomposition reaction to confirm that the ionic liquid was not deteriorated through the formic acid decomposition reaction for 80 hours. It has been therefore decided that the ionic liquid is durable against repeated use to lead to significant cost reduction.

## Claims

1. A hydrogen generation system comprising:
a hydrogen generation reaction section for containing a liquid mixture of formic acid and an ionic liquid, and decomposing the formic acid into hydrogen and carbon dioxide by heating; and
a separation section for separating a mixture of hydrogen and carbon dioxide supplied from the hydrogen generation reaction section into hydrogen and carbon dioxide, wherein
after the separation, the hydrogen is sent out of the separation section to an external hydrogen destination, and the carbon dioxide is sent out of the separation section to an external carbon dioxide destination or emitted into the atmosphere.

2. A hydrogen generation system according to claim 1, wherein the hydrogen generation reaction section comprises: a closed reactor for containing the liquid mixture of formic acid and an ionic liquid; a heating means for heating the liquid mixture of formic acid and an ionic liquid in the reactor; and a spreading section for expanding the surface area of the liquid mixture of formic acid and an ionic liquid in the reactor, and the reactor has a mixture outlet for sending out the mixture of hydrogen and carbon dioxide generated through the reaction in the reactor to the separation section.

3. A hydrogen generation system according to claim 1, wherein the separation section comprises a water container for containing water through which the mixture of hydrogen and carbon dioxide passes and in which the carbon dioxide is dissolved; and a gas-liquid interface increasing section provided in the water container for increasing contact interfaces between the mixture and the water in the water container, wherein the water container has an outlet for sending out the hydrogen outside the system after separated by dissolving the carbon dioxide into water.

4. A hydrogen generation system according to claim 2, wherein the spreading section has a spreading wall movably provided in the reactor so as to contact with the liquid mixture of formic acid and an ionic liquid; and drive means for moving the spreading wall, and the movement of the spreading wall raises the liquid mixture of formic acid and an ionic liquid above the liquid level and causes the liquid mixture to run along a surface of the spreading wall.

5. A hydrogen generation system according to claim 2, wherein the spreading section has one or more spreading walls stood in the reactor; and a liquid circulation line for pumping up the liquid mixture of formic acid and an ionic liquid from a bottom of the reactor to an upper part of each spreading wall, and the liquid mixture of formic acid and an ionic liquid runs along surfaces of each spreading wall.

6. A hydrogen generation system according to claim 3, wherein the gas-liquid interface increasing section has a filter through which hydrogen and carbon dioxide can pass, the filter provided in the water container to define a plurality of compartments, and the carbon dioxide in the mixture is dissolved into the water to be separated from the hydrogen as the mixture consecutively passes through the water in the plurality of compartments.

7. A hydrogen generation system according to claim 3, wherein the separation section further comprises a water temperature adjustment mechanism for cooling and heating water in the water container in a switching manner; and a selector valve provided at the outlet for changing the sending out direction, and the carbon dioxide is dissolved into the water to separate the hydrogen as the mixture passes through the water in the water container cooled by the water temperature adjustment mechanism, and the hydrogen separated is sent out to the external hydrogen destination through the outlet, and then ports of the selector valve are changed, the carbon dioxide is generated with the water temperature adjustment mechanism, by heating the water in which carbon dioxide is dissolved, and the carbon dioxide is sent outside the system through the outlet.

8. A hydrogen generation system according to claim 1 further comprising a formic acid storage section for storing formic acid supplied externally, so that formic acid is supplied from the formic acid storage section to the hydrogen generation reaction section.

9. A method for generating hydrogen comprising: heating a liquid mixture of formic acid and an ionic liquid to generate hydrogen using the hydrogen generation system according to claim 1.

10. A method according to claim 9, wherein the ionic liquid is represented by the following general formula (1) 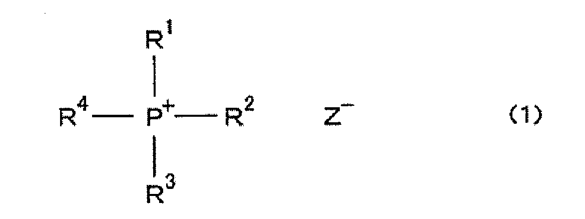 wherein
R¹, R², R³, and R⁴, the same or different, each represent an alkyl group that may be substituted with a halogen atom, or an aryl group or a heteroaryl group that may be substituted at the o-position or the p-position with 1 to 3 halogen atoms or a lower alkyl or alkoxy group, and
Z- represents a counter anion for a phosphonium cation.

11. A method according to claim 10, wherein in the general formula (1), R¹, R², R³, and R⁴ are an alkyl or aryl group having 4 to 20 carbon atoms.

12. A method according to claim 10, wherein the phosphonium cation is a tetraphenylphosphonium salt, a trihexyltetradecylphosphonium salt or a tetrabutylphosphonium salt.

13. A method according to claim 10, wherein the ionic liquid include at least one of HCOO-, CF₃SO₃-, C1-, NO₃-, and p-toluenesulfonate ion as counter anion.

14. A method according to claim 9, wherein heating temperature of the liquid mixture of formic acid and an ionic liquid is normal temperature to 200°C.

15. A method according to claim 9, wherein formic acid and the ionic liquid are mixed at a mole ratio of 1:15 to 20:1.
